(19) Europäisches Patentamt
European Patent Office
Office européen des brevets

(11) Veröffentlichungsnummer: **0 107 120**
**B1**

# (12) EUROPÄISCHE PATENTSCHRIFT

(45) Veröffentlichungstag der Patentschrift: **29.10.86**

(51) Int. Cl.[4]: **C 07 F 9/10**, C 07 F 9/09, A 61 K 31/675

(21) Anmeldenummer: **83109927.0**

(22) Anmeldetag: **05.10.83**

(54) **Substituierte Aminoalkanolphospholipide und Verfahren zu ihrer Herstellung.**

(30) Priorität: **25.10.82 DE 3239388**
**25.10.82 DE 3239390**

(43) Veröffentlichungstag der Anmeldung:
**02.05.84 Patentblatt 84/18**

(45) Bekanntmachung des Hinweises auf die Patenterteilung:
**29.10.86 Patentblatt 86/44**

(84) Benannte Vertragsstaaten:
**AT BE CH DE FR GB IT LI LU NL SE**

(56) Entgegenhaltungen:
**EP - A - 0 069 968**
**GB - A - 2 020 663**

**PATENTS ABSTRACTS OF JAPAN, Band 4, Nr. 178 (C-34)[660], 10. Dezember 1980**
**PATENTS ABSTRACTS OF JAPAN, Band 5, Nr. 194 (C-82)[866], 10. Dezember 1981**

**Die Akte enthält technische Angaben, die nach dem Eingang der Anmeldung eingereicht wurden und die nicht in dieser Patentschrift enthalten sind.**

(73) Patentinhaber: **A. Nattermann & Cie. GmbH, Nattermannallee 1, D-5000 Köln 30 (DE)**

(72) Erfinder: **Lautenschläger, Hans-Heiner, Dr., Neusser Gasse 50, D-5024 Pulheim (DE)**
Erfinder: **Borbe, Harald, Dr., Lübecker Strasse 5, D-5000 Köln 40 (DE)**
Erfinder: **Prop, Gerrit, Dr., Mohnblumenweg 25, D-5024 Pulheim (DE)**
Erfinder: **Wirtz-Peitz, Ferdinand, Dr., Am Angelsdorn 9, D-5024 Pulheim (DE)**
Erfinder: **Doppelfeld, Ilse-Stephanie, Im Bruchfeldchen 35, D-5010 Giessen (DE)**
Erfinder: **Parnham, Michael John, Dr., Aurikelweg 92, D-5024 Pulheim (DE)**

(74) Vertreter: **Redies, Bernd, Dr. rer. nat., COHAUSZ & FLORACK Patentanwaltsbüro Schumannstrasse 97 Postfach 14 01 47, D-4000 Düsseldorf 1 (DE)**

EP 0 107 120 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die vorliegende Erfindung betrifft neue substituierte Aminoalkanolphospholipide und Verfahren zu ihrer Herstellung.

Die erfindungsgemässen Verbindungen entsprechen der allgemeinen Formel I

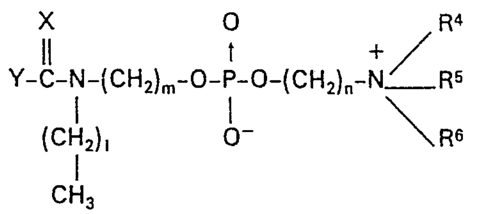

I

worin X ein Sauerstoff- oder Schwefelatom und Y den Rest $-NR^1R^2$ oder $-OR^3$ bedeuten, wobei $R^1$, $R^2$ gleich oder voneinander verschieden sein können und einen gesättigten oder ungesättigten, geradkettigen oder verzweigten Alkylrest mit 1–20 Kohlenstoffatomen, einen Benzylrest, Phenylrest oder Wasserstoff darstellen, und $R^3$ für Phenyl, Benzyl oder $C_{1-4}$-Alkyl steht. $R^4$, $R^5$, $R^6$ können gleich oder voneinander verschieden sein und stehen für Wasserstoff oder einen niederen Alkylrest mit 1–4 Kohlenstoffatomen. 1 bedeutet eine ganze Zahl von 0–19, m eine ganze Zahl von 2–6, n eine ganze Zahl von 2–4.

Verbindungen gemäss der Erfindung sind beispielsweise:

2-(3-Hexadecyl-1-methylureido)-ethanol-phosphocholin
2-(1-Methyl-3-octadecylureido)-ethanol-phosphocholin
2-(3-Eicosyl-1-methylureido)-ethanol-phosphocholin
2-(1-Methyl-3-oleylureido)-ethanol-phosphocholin
2-(3-Methyl-1-undecylureido)-ethanol-phosphocholin
2-(3-Ethyl-1-undecylureido)-ethanol-phosphocholin
2-(3,3-Dimethyl-1-undecylureido)-ethanol-phosphocholin
2-(3-Methyl-1-undecylthioureido)-ethanol-phosphocholin
2-(1-Hexadecyl-3-methylureido)-ethanol-phosphocholin
2-(3-Ethyl-1-hexadecylureido)-ethanol-phosphocholin
2-(1-Hexadecyl-3-methylthioureido)-ethanol-phosphocholin
2-(3,3-Dimethyl-1-hexadecylureido)-ethanol-phosphocholin
2-(3-Methyl-1-octadecylureido)-ethanol-phosphocholin
2-(3-Ethyl-1-octadecylureido)-ethanol-phosphocholin
2-(3,3-Dimethyl-1-octadecylureido)-ethanol-phosphocholin
2-(3-Methyl-1-octadecylthioureido)-ethanol-phosphocholin
2-(3-Butyl-1-octadecylureido)-ethanol-phosphocholin
2-(3-Hexadecyl-1-octadecylureido)-ethanol-phosphocholin
2-(3-Benzyl-1-octadecylureido)-ethanol-phosphocholin
3-(3-Methyl-1-octadecylureido)-propanol-(1)-phosphocholin
3-(3-Ethyl-1-octadecylureido)-propanol-(1)-phosphocholin
3-(3,3-Dimethyl-1-octadecylureido)-propanol-(1)-phosphocholin
3-(3-Methyl-1-octadecylthioureido)-propanol-(1)-phosphochloin
4-(3-Methyl-1-octadecylureido)-butanol-(1)-phosphocholin
4-(3-Ethyl-1-octadecylureido)-butanol-(1)-phosphocholin
4-(3,3-Dimethyl-1-octadecylureido)-butanol-(1)-phosphocholin
4-(3-Methyl-1-octadecylthioureido)-butanol-(1)-phosphocholin
2-(1-Eicosyl-3-methylureido)-ethanol-phosphocholin
2-(1-Eicosyl-3-ethylureido)-ethanol-phosphocholin
2-(3,3-Dimethyl-1-eicosylureido)-ethanol-phosphocholin
2-(1-Eicosyl-3-methylthioureido)-ethanol-phosphocholin
2-(3-Phenyl-1-undecylureido)-ethanol-phosphocholin
2-(3-Benzyl-1-undecylureido)-ethanol-phosphocholin
2-(1-Undecylureido)-ethanol-phosphocholin
2-(3-Hexadecyl-1-undecylureido)-ethanol-phosphocholin
2-(3-Oleyl-1-undecylureido)-ethanol-phosphocholin
[2-(3-Methyl-1-octadecylureido)-ethyl]-(2-triethylammonioethyl)-phosphat
[2-(3-Methyl-1-octadecylureido)-ethyl]-(2-dimethylammonioethyl)-phosphat
N-Benzyloxycarbonyl-N-methyl-2-aminoethanol-(1)-phosphocholin
N-Benzyloxycarbonyl-N-undecyl-2-aminoethanol-(1)-phosphocholin
N-Benzyloxycarbonyl-N-hexadecyl-2-aminoethanol-(1)-phosphocholin
N-Benzyloxycarbonyl-N-octadecyl-2-aminoethanol-(1)-phosphocholin
N-Benzylocycarbonyl-N-octadecyl-3-aminopropanol-(1)-phosphocholin
N-Benzyloxycarbonyl-N-Octadecyl-4-aminobutanol-(1)-phosphocholin
N-Benzyloxycarbonyl-N-eicosyl-2-aminoethanol-(1)-phosphocholin
N-Methoxycarbonyl-N-octadecyl-2-aminoethanol-(1)-phosphocholin
N-Ethoxycarbonyl-N-octadecyl-2-aminoethanol-(1)-phosphocholin.

Die erfindungsgemässen Verbindungen sind biologisch sehr aktiv und können z.B. in Arzneimitteln und im Pflanzenschutz eingesetzt werden. Die neuen Verbindungen zeigen eine starke pharmakologische Wirkung, insbesondere zeigen sie eine blutdrucksenkende und immunregulative Wirkung. Sie können daher zur Behandlung des Hochdrucks, aber auch zur Behandlung entzündlicher Krankheiten und zur Therapie der Atherosklerose sowie von Tumoren genutzt werden. Bei den strukturähnlichen Verbindungen der JP-A-55 118 494 und JP-A-56 115 792 wurde nur eine Antitumor-Wirkung festgestellt.

Zur Herstellung der neuen Ureidoalkylphospholipide werden N-Alkyl-aminoalkanole der allgemeinen Formel II

$$CH_3-(CH_2)_l-NH-(CH_2)_m-OH \qquad II$$

worin l und m die in Formel I angegebene Bedeutung besitzen, in einem indifferenten organischen Lösungsmittel, wie z.B. Ether, Tetrahydrofuran, Dioxan, Aceton, Chloroform, Dimethylformamid mit einem Benzylhalogenid oder Chlorameisensäurebenzylester, bevorzugt in Gegenwart einer Hilfsbase, wie z.B. Pyridin, Dimethylaminopyridin, Triethylamin, Alkalihydroxid, Erdalkalioxid, zu den Verbindungen der allgemeinen Formel III umgesetzt.

Die Reaktion kann auch zweiphasig, ggfs unter Anwendung eines Phasen-Transferkatalysators durchgeführt werden. Die Verbindungen III mit $R^7$ = Benzyl und m = 2 können auch aus N-Benzylalkylaminen und Ethylenoxid hergestellt werden. Die Verbindungen II sind entweder durch Umsetzung der entsprechenden Amine mit Ethylenoxid oder durch Reduktion von N-Acyl-ω-aminoalkanolen zugänglich.

Die Verbindungen der allgemeinen Formel III

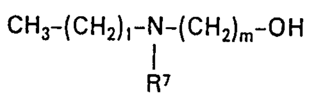

III

worin l und m die in Formel I angegebenen Bedeutungen besitzen und $R^7$ einen durch Hydrierung abspaltbaren Rest, wie z.B. Benzyl oder Benzyloxycarbonyl darstellt, werden nach an sich bekannten Verfahren in die Phospholipide der allgemeinen Formel IV

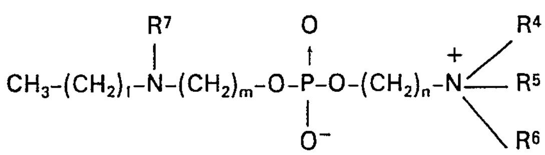

IV

worin $R^4$, $R^5$, $R^6$, l, m und n die in Formel I und $R^7$ die in Formel III angegebene Bedeutung besitzen, überführt. Verbindungen der Formel IV mit $R^7$ = Benzyloxycarbonyl entsprechen Verbindungen der Formel I mit $R^3$ = Benzyl.

Beispielsweise lassen sich die Verbindungen III mit Dichlorphosphorsäure-ω-halogenalkylestern der Formel V

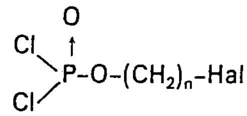

V

worin n die in Formel I angegebene Bedeutung hat und Hal ein Chlor- oder Bromatom ist, in einem indifferenten organischen Lösungsmittel, ggfs unter Anwendung einer Hilfsbase, phosphorylieren und nachfolgend durch Reaktion mit einem Amin der Formel VI

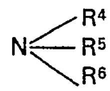

VI

worin $R^4$, $R^5$, $R^6$ die in Formel I angegebenen Bedeutungen besitzen, in einem indifferenten organischen Lösungsmittel, ggfs unter Druck, zu den Verbindungen der Formel IV umsetzen [H.K. Mangold, Angew. Chem. 91, 550-560 (1979); H. Eibl, Chem. and Phys. of Lipids 26, 405-429, (1980)].

Die Verbindungen der Formal IV können auch hergestellt werden, indem man Verbindungen der Formel III mit Phosphoroxytrichlorid und nachfolgend mit einem Alkandiol der Formel VII

$$HO-(CH_2)_n-OH \qquad VII$$

in der n die in Formel I angegebene Bedeutung besitzt, ggfs unter Einsatz von Hilfsbasen, wie z.B. Triethylamin, und Anwendung inerter Lösungsmittel, wie z.B. Tetrahydrofuran, zu cyclischen Zwischenprodukten der Formel VIII

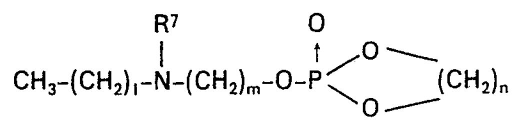

VIII

worin l, m, n und $R^7$ die in Formel IV angegebenen Bedeutungen besitzen, umsetzt [H. Eibl, Phospholipid Synthesis in Knight (Herausgeber), Liposomes, Elsevier 1981, S. 19-50].

Die Zwischenprodukte der Formel VIII lassen sich auch darstellen, indem man Verbindungen der Formel III mit einer cyclischen Phosphorverbindung der Formal IX

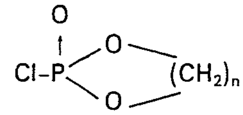

IX

worin n die in Formel I angegebene Bedeutung hat, in einem indifferenten organischen Lösungsmittel unter Zusatz einer Hilfsbase umsetzt [N.S. Chandrakumar et al., Tetrahedron Lett. 23, 1043-46, (1982); Biochim. Biophys. Acta 711, 357-360, (1982)].

Die Zwischenprodukte VIII lassen sich auf einfache Weise, z.B. durch Behandlung mit einem Amin der Formel VI in einem organischen Lösungsmittel, ggfs unter Druck, in die Verbindungen der Formel IV überführen (N.T. Thuong und P. Chabrier, Bull. Soc. Chim. Fr. 1974, 667–671).

Die Verbindungen der allgemeinen Formel IV werden in einem geeigneten organischen Lösungsmittel, wie z.B. Methanol, Ethanol, Ether, Dioxan oder deren Mischungen untereinander und mit Wasser unter Abspaltung der Benzylgruppe in Gegenwart eines üblichen Hydrierkatalysators, wie z.B. Palladium/Aktivkohle, mit Wasserstoff hydriert, wobei die Verbindungen der allgemeinen Formel X

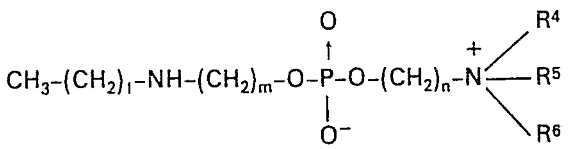

worin $R^4$, $R^5$, $R^6$, l, m und n die in Formel I angegebenen Bedeutungen besitzen, entstehen.

Die Verbindungen der Formel X werden mit Kohlensäurederivaten der Formal XI oder XII

$R^1$-N=C=X XI

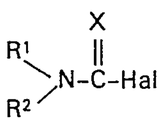

XII

worin $R^1$, $R^2$ und X die in Formal I angegebenen Bedeutungen haben, in Substanz oder in einem indifferenten organischen Lösungsmittel, wie z.B. Dimethylformamid, Chloroform, N-Methylacetamid, ggfs unter Zusatz eines Katalysators, wie z.B. Dimethylaminopyridin oder einer Base, wie z.B. Pyridin, Triethylamin, insbesondere bei Verwendung von Verbindungen der Formal XII, zu den erfindungsgemässen Verbindungen der Formel I umgesetzt.

Die Verbindungen der Formel I mit $R^1 = R^2 = H$ lassen sich zweckmässig in wässrigen oder wässrig-organischen Medien, wie z.B. Wasser/Dioxan, unter Verwendung von Alkalicyanaten, ggfs unter Zusatz einer organischen oder anorganischen Säure, vorzugsweise Essigsäure, analog den bekannten Harnstoffsynthesen (vergl. z.B. Weygand-Hilgetag, Org. Chem. Experimentierkunst, Verlag J.A. Barth-Leipzig 1970, S. 420) aus den Verbindungen der Formel X herstellen.

Auch können die Verbindungen der Formel I mit $R^1$ = Benzyl und $R^2$ = H sowie X = O in einem geeigneten organischen Lösungsmittel, wie z.B. Methanol, Ethanol, Ether, Dioxan oder deren Mischungen untereinander und mit Wasser unter Abspaltung der Benzylgruppe in Gegenwart eines üblichen Hydrierkatalysators, wie z.B. Palladium/Aktivkohle, mit Wasserstoff hydriert werden, wobei Verbindungen der Formel I mit $R^1 = R^2$ = H entstehen.

Zur Herstellung der neuen (Aryl)alkyloxycarbonylaminoalkanolphospholipide der Formel I werden N-Alkyl-aminoalkohole der Formel II in einem indifferenten organischen Lösungsmittel, wie z.B. Ether, Tetrahydrofuran, Dioxan, Aceton, Chloroform, Dimethylformamid mit Chlorameisensäurebenzylester, Chlorameisensäurephenylester oder Chlorameisensäurealkylestern, bevorzugt in Gegenwart einer Hilfsbase, wie z.B. Pyridin, Dimethylaminopyridin, Triethylamin, Alkalihydroxid, Erdalkalioxid, zu den Verbindungen der allgemeinen Formel XIII umgesetzt.

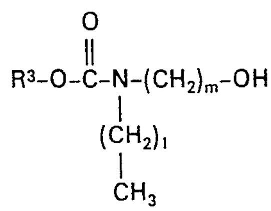

XIII

Die Verbindungen der Formel XIII, worin $R^3$, l und m die in Formel I angegebenen Bedeutungen besitzen, werden nach an sich bekannten Verfahren in die Phospholipide der allgemeinen Formel I überführt.

Beispielsweise lassen sich die Verbindungen der Formel XIII mit Dichlorphosphorsäure-ω-halogen-alkylestern der Formel V in einem indifferenten organischen Lösungsmittel, ggfs unter Anwendung einer Hilfsbase, phosphorylieren und nachfolgend durch Reaktion mit einem Amin der Formel VI in einem indifferenten organischen Lösungsmittel, ggfs unter Druck, zu den Verbindungen der Formel I umsetzen.

Die Verbindungen der Formel I können auch hergestellt werden, indem man Verbindungen der Formel XIII mit Phosphoroxytrichlorid phosphoryliert und nachfolgend mit einem Alkandiol der Formel VII oder mit Verbindungen der Formel IX ggfs, unter Einsatz von Hilfsbasen wie z.B. Triethylamin und Verwendung inerter Lösungsmittel wie z.B. Tetrahydrofuran zu den cyclischen Zwischenprodukten der Formel XIV

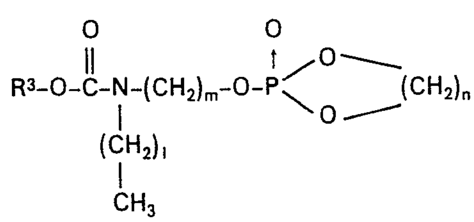

XIV

worin l, m, n und $R^3$ die in Formel I angegebenen Bedeutungen besitzen, umsetzt.

Die Zwischenprodukte XIV lassen sich auf einfache Weise, z.B. durch Behandlung mit einem Amin der Formel VI, in einem organischen Lösungsmittel, ggfs unter Druck, in die Verbindungen der Formel I überführen. Die Verbindungen der Formel I lassen sich auch darstellen, indem man Verbindungen der Formel X mit Chlorameisensäureestern in inerten Lösungsmitteln, wie z.B. Chloroform, Dimethylformamid, ggfs unter Zusatz einer Hilfsbase, wie z.B. Pyridin, Triethylamin, umsetzt.

Als Ausgangsverbindungen der Formel II kommen z.B. folgende Verbindungen in Frage:

2-Methylamino-ethanol, 2-Ethylamino-ethanol, 2-Propylamino-ethanol, 2-Butylamino-ethanol, 2-Pentylamino-ethanol, 2-Hexylamino-ethanol, 2-Heptylamino-ethanol, 2-Octylamino-ethanol, 2-Nonylamino-ethanol, 2-Decylamino-ethanol, 2-Undecylamino-ethanol, 2-Dodecylamino-ethanol, 2-Tridecylamino-ethanol, 2-Tetradecylaminoethanol, 2-Pentadecylamino-ethanol, 2-Hexadecylamino-ethanol, 2-Heptadecylamino-ethanol, 2-Octadecylamino-ethanol, 2-Nonadecylamino-ethanol, 2-Eicosylamino-ethanol, 3-Methylamino-propanol, 3-Ethylamino-propanol, 3-Propylamino-propanol, 3-Butylamino-propanol, 3-Pentylamino-propanol, 3-Hexylamino-propanol, 3-Heptylamino-propanol, 3-Octylamino-propanol, 3-Nonylamino-propanol, 3-Decylamino-propanol, 3-Undecylamino-propanol, 3-Dodecylamino-propanol, 3-Tridecylamino-propanol, 3-Tetradecylaminopropanol, 3-Pentadecylamino-propanol, 3-Hexadecylamino-propanol, 3-Heptadecylamino-propanol, 3-Octadecylamino-propanol, 3-Nonadecylamino-propanol, 3-Eicosylamino-propanol, 4-Methylamino-butanol, 4-Ethylamino-butanol, 4-Propylamino-butanol, 4-Butylamino-butanol, 4-Pentylamino-butanol, 4-Hexylamino-butanol, 4-Heptylamino-butanol, 4-Octylamino-butanol, 4-Nonylamino-butanol, 4-Decylamino-butanol, 4-Undecylamino-butanol, 4-Dodecylamino-butanol, 4-Tridecylamino-butanol, 4-Tetradecylamino-butanol, 4-Pentadecylamino-butanol, 4-Hexadecylamino-butanol, 4-Heptadecylamino-butanol, 4-Nonadecylamino-butanol, 4-Octadecylamino-butanol, 4-Eicosylamino-butanol, 5-Methylamino-pentanol, 5-Ethylamino-pentanol, 5-Propylamino-pentanol, 5-Butylamino-pentanol, 5-Pentylamino-pentanol, 5-Hexylamino-pentanol, 5-Heptylamino-pentanol, 5-Octylamino-pentanol, 5-Nonylamonio-pentanol, 5-Decylamino-pentanol, 5-Undecylamino-pentanol, 5-Dodecylamino-pentanol, 5-Tridecylamino-pentanol, 5-Tetradecylamino-pentanol, 5-Pentadecylamino-pentanol, 5-Hexadecylamino-pentanol, 5-Heptadecylamino-pentanol, 5-Octadecylamino-pentanol, 5-Nonadecylamino-pentanol, 5-Eicosylamino-pentanol, 6-Methylamino-hexanol, 6-Ethylamino-hexanol, 6-Propylamino-hexanol, 6-Butylamino-hexanol, 6-Pentylamino-hexanol, 6-Hexylamino-hexanol, 6-Heptylamino-hexanol, 6-Octylamino-hexanol, 6-Nonylamino-hexanol, 6-Decylamino-hexanol, 6-Undecylamino-hexanol, 6-Dodecylamino-hexanol, 6-Tridecylamino-hexanol, 6-Tetradecylamino-hexanol, 6-Pentadecylamino-hexanol, 6-Octadecylamino-hexanol, 6-Hexadecylaminohexanol, 6-Heptadecylamino-hexanol, 6-Nonadecylamino-hexanol oder 6-Eicosylamino-hexanol

Als Ausgangsverbindungen der Formel V kommen z.B. in Frage: Dichlorphosphorsäure-2-bromethylester, Dichlorphosphorsäure-2-chlorethylester, Dichlorphosphorsäure-3-brompropylester, Dichlorphosphorsäure-4-brombutylester.

Als Ausgangsverbindungen der Formel VI kommen bevorzugt sekundäre und tertiäre Amine in Frage z.B.:
Dimethylamin, Diethylamin, Dipropylamin, Dibutylamin, Trimethylamin, Triethylamin, Tripropylamin, Tributylamin, Ethylmethylamin, Methylpropylamin, Ethylpropylamin, Butylmethylamin, Butylethylamin, Butylpropylamin, Dimethylethylamin, Butyldimethylamin, Diethylmethylamin, Diethylpropylamin, Butyldiethylamin, Dipropylmethylamin, Dipropylethylamin, Butyldipropylamin, Dibutylmethylamin, Dibutylethylamin, Dibutylpropylamin, Ethylmethylpropylamin, Butylmethylpropylamin, Butylethylmethylamin, Butylethylpropylamin.

Als Ausgangsverbindungen der Formel XI kommen z.B. in Frage:
Methylisocyanat, Methylisothiocyanat, Ethylisocyanat, Ethylisothiocyanat, Propylisocyanat, Propylisothiocyanat, Isopropylisocyanat, Isopropylisothiocyanat, Butylisocyanat, Butylisothiocyanat, Allylisocyanat, Allylisothiocyanat, Hexylisocyanat, Hexylisothiocyanat, Octiylisocyanat, Octylisothiocyanat, Decylisocyanat, Decylisothiocyanat, Undecylisocyanat, Undecylisothiocyanat, Dodecylisocyanat, Dodecylisothiocyanat, Tetradecylisocyanat, Tetradecylisothiocyanat, Hexadecylisocyanat, Hexadecylisothiocyanat, Octadecylisocyanat, Octadecylisothiocyanat, Oleylisocyanat, Oleylisothiocyanat, Eicosylisocyanat, Eicosylisothiocyanat, Phenylisocyanat, Benzylisocyanat, Phenylisothiocyanat, Benzylisothiocyanat.

Als Ausgangsverbindungen der Formel XII kommen bevorzugt Carbamidsäure- und Thiocarbamidsäurechloride in Frage, deren Substituenten $R^1$, $R^2$ eine kurzkettige Kohlenwasserstoffkette mit 1–4 C-Atomen enthalten, z.B.:
Dimethylcarbamidsäurechlorid,
Diethylcarbamidsäurechlorid

Dipropylcarbamidsäurechlorid,
Dibutylcarbamidsäurechlorid,
Methylethylcarbamidsäurechlorid,
Methylpropylcarbamidsäurechlorid,
Methylbutylcarbamidsäurechlorid,
Ethylpropylcarbamidsäurechlorid,
Butylpropylcarbamidsäurechlorid,
Butylethylcarbamidsäurechlorid,
Dimethylthiocarbamidsäurechlorid,
Diethylthiocarbamidsäurechlorid,
Dipropylthiocarbamidsäurechlorid,
Dibutylthiocarbamidsäurechlorid,
Methylethylthiocarbamidsäurechlorid,
Methylpropylthiocarbamidsäurechlorid,
Methylbutylthiocarbamidsäurechlorid,
Ethylpropylthiocarbamidsäurechlorid,
Butylpropylcarbamidsäurechlorid,
Butylethylthiocarbamidsäurechlorid.

Die neuen substituierten Aminoalkanolphospolipide können z.B. zu pharmazeutischen Präparaten verarbeitet werden. Bei den pharmazeutischen Präparaten handelt es sich um solche zur enteralen wie oralen oder rektalen sowie parenteralen Verabreichung, welche die pharmazeutischen Wirkstoffe allein oder zusammen mit einem üblichen, pharmazeutisch anwendbaren Trägermaterial enthalten. Vorteilhafterweise liegt die pharmazeutische Zubereitung des Wirkstoffes in Form von Einzeldosen vor, die auf die gewünschte Verabreichung abgestimmt sind, wie z.B. Tabletten, Dragées, Kapseln, Suppositorien, Granulate, Lösungen, Emulsionen oder Suspensionen. Die Dosierung der Verbindungen liegt üblicherweise zwischen 1-1000 mg pro Dosis, vorzugsweise 1-10 mg je Dosis, und kann ein- oder mehrmals, bevorzugt zwei- bis dreimal, täglich verabreicht werden.

Die Herstellung der erfindungsgemässen Verbindungen wird durch die folgenden Beispiele näher erläutert:

A. Herstellung der Alkohole der Formel III

Beispiel 1

N-Benzyloxycarbonyl-N-methyl-2-aminoethanol.

75 g 2- Methylamino -ethanol und 101g Triethylamin werden mit 1000 ml absol. Chloroform gemischt und zu dieser Lösung 171 g Chlorameisensäurebenzylester bei ca. 20°C zugetropft. Die Mischung wird 1 h bei Raumtemperatur gerührt, mit Wasser, verdünnter Salzsäure und nochmals mit Wasser gewaschen und über Natriumsulfat getrocknet. Nach Abdampfen der Lösungsmittel im Vakuum bleiben 173 g Öl zurück.
IR (Film): 1695 $cm^{-1}$

Beispiel 2

N-Benzyloxycarbonyl-N-undecyl-2-aminoethanol
analog Beispiel 1 aus:
124 g 2- Undecylamino -ethanol
58 g Triethylamin
500 ml Chloroform
97 g Chlorameisensäurebenzylester.

Reinigung durch Säulenchromatographie (Kieselgel//Hexan/Essigsäureethylester).
Ausbeute: 113 g Öl mit IR (Film): 1683 $cm^{-1}$

Beispiel 3

N-Benzyloxycarbonyl-N-hexadecyl-2-aminoethanol
analog Beispiel 1 aus:
71 g 2-Hexadecylamino-ethanol
25 g Triethylamin
250 ml Chloroform
43 g Chlorameisensäurebenzylester.

Reinigung durch Säulenchromatographie (Kieselgel//Chloroform).
Ausbeute: 40,2 g Öl mit IR (Film): 1690 $cm^{-1}$

Beispiel 4

N-Benzyl-N-octadecyl-2-aminoethanol.

In ein Gemisch aus 65,9 g N-Benzyl-octadecylamin und 200 ml Methanol werden bei Raumtemperatur innerhalb von 2 h 40 ml mit Trockeneis gekühltes Ethylenoxid zugetropft, die Mischung weitere 3 h gerührt, das Lösungsmittel abgezogen und der Rückstand durch Säulenchromatographie (Kieselgel/Chloroform) gereinigt.
Ausbeute: 73 g mit Schmp. 31°C

Beispiel 5

N-Benzyloxycarbonyl-N-octadecyl-3-aminopropanol
analog Beispiel 1 aus:
34,2 g 3-Octadecylamino-propanol
10,5 g Triethylamin
100 ml Chloroform
17,7 g Chlorameisensäurebenzylester.

Reinigung durch Säulenchromatographie (Kieselgel//Chloroform).
Ausbeute: 33,1 g Öl mit IR (Film): 1680 $cm^{-1}$

Beispiel 6

N-Benzyloxycarbonyl-N-octadecyl-4-aminobutanol
analog Beispiel 1 aus:
24,8 g 4- Octadecylamino -butanol
7,4 g Triethylamin
200 ml Chloroform
12,5 g Chlorameisensäurebenzylester.

Reinigung durch Säulenchromatographie (Kieselgel/Chloroform).
Ausbeute: 18 g Öl mit IR (Film): 1690 $cm^{-1}$

Beispiel 7

N-Benzyloxycarbonyl-N-eicosyl-2-aminoethanol
analog Beispiel 1 aus:
32,8 g 2-Eicosylamino -ethanol
9,7 g Triethylamin
200 ml Chloroform
16,3 g Chlorameisensäurebenzylester.

Reinigung durch Säulenchromatographie (Kieselgel//Hexan/Essigsäureethylester).

Ausbeute: 14,6 g mit Schmp. 53-54°C, IR (Film): 1690 $cm^{-1}$

Darstellung der Phospholipide der Formel IV.

Beispiel 8

N-Benzyloxycarbonyl-N-methyl-2-aminoethanol-phosphocholin.

a) In eine Mischung von 105 g Dichlorphosphorsäure-2-bromethylester, 53 ml Pyridin und 800 ml absol. Chloroform werden 46 g N--Benzyloxycarbonyl-N-methyl-2-aminoethanol, gelöst in 220 ml Chloroform, unter Eiskühlung zugetropft. Die Reaktionsmischung wird 1 h unter Eiskühlung und nach Zugabe von Eiswasser eine weitere Stunde bei Raumtemperatur gerührt. Die organische Phase wird abgetrennt, mit Wasser neutral gewaschen, über Natriumsulfat getrocknet und eingeengt. Der Rückstand wird durch Säulenchromatographie (Kieselgel/Chloroform/Methanol) gereinigt.

Ausbeute: 28 g (N-Benzyloxycarbonyl-N-metyhl-2-aminoethyl)-2-bromethyl-phosphat (Öl).

b) 28 g (N-Benzyloxycarbonyl-N-methyl-2-aminoethyl)-2-bromethylphosphat werden in 300 ml trockenem Toluol gelöst, mit 30 ml 33%iger ethanolischer Trimethylaminlösung versetzt und die Mischung 4 h bei 60°C im Autoklaven gerührt. Anschliessend werden die Lösungsmittel am Rotavapor abgezogen und der Rückstand durch Säulenchromatographie (Kieselgel/Chloroform/Methanol/Wasser) gereinigt.

Ausbeute: 8,5 g mit Schmp. 75-78°C.

Beispiel 9

N-Benzyloxycarbonyl-N-undecyl-2-aminoethanol-phosphocholin

analog Beispiel 8 aus:

a) 75 g Dichlorphosphorsäure-2-bromethylester
51 ml Pyridin
600 ml Chloroform
54,2 g N-Benzyloxycarbonyl-N-undecyl-2-aminoethanol in 150 ml Chloroform.

Ausbeute: 47,8 g (N-Benzyloxycarbonyl-N-undecyl-2-aminoethyl)-2-bromethyl-phosphat (Öl).

b) 47,6 g (N-Benzyloxycarbonyl-N-undecyl-2-aminoethyl)-2-bromethyl-phosphat.
300 ml Toluol
30 ml 33%ige ethanolische Trimethylaminlösung.

Ausbeute: 29,9 g mit Schmp. 224-226°C IR (in KBr): 1692 $cm^{-1}$

Beispiel 10

N-Benzyloxycarbonyl-N-hexadecyl-2-aminoethanol-phosphocholin

analog Beispiel 8 aus:

a) 46 g Dichlorphosphorsäure-2-bromethylester
23 ml Pyridin
400 ml Chloroform
40 g N-Benzyloxycarbonyl-N-hexadecyl-2-aminoethanol in 95 ml Chloroform.

Ausbeute: 21,5 g (N-Benzyloxycarbonyl-N-hexadecyl-2-aminoethyl)-2-bromethyl-phosphat (Öl).

b) 21,4 g (N-Benzyloxycarbonyl-N-hexadecyl-2-aminoethyl)-2-bromethyl-phosphat
100 ml Toluol
10 ml 33%ige ethanolische Trimethylaminlösung.

Ausbeute: 7 g mit Schmp. 226—228°C IR (in KBr): 1691 $cm^{-1}$

Beispiel 11

N-Benzyl-N-octadecyl-2-aminoethanol-phosphocholin.

a) In eine Mischung aus 10 g N-Benzyl-N-octadecyl-2-aminoethanol, 50 ml Chloroform und 5 g Triethylamin werden unter Eiskühlung 8,3 g Dichlorphosphorsäure-2-bromethylester eingetropft. Die Reaktionsmischung wird weitere 3 h bei Raumtemperatur und nach Zugabe von Eiswasser nochmals 1 h gerührt. Die organische Phase wird abgetrennt, mit Wasser neutral gewaschen, über Natriumsulfat getrocknet und eingeengt. Der Rückstand wird durch Säulenchromatographie (Kieselgel/Chloroform/Methanol) gereinigt.

Ausbeute: 9,2 g (N-Benzyl-N-octadecyl-2--aminoethyl)-2-bromethylphosphat (Öl)

b) N-Benzyl-N-octadecyl-2-aminoethanol-phosphocholin

analog Beispiel 8b aus:

9,2 g (N-Benzyl-N-octadecyl-2-aminoethyl)-2-bromethylphosphat
30 ml Toluol
5,2 ml 33%ige ethanolische Trimethylaminlösung.

Ausbeute: 6,4 g mit Schmp. 215-217°C.

Beispiel 12

N-Benzyloxycarbonyl-N-octadecyl-3-aminopropanol-(1)-phosphocholin

analog Beispiel 8 aus:

a) 34,3 g Dichlorphosphorsäure-2-bromethylester
140 ml Pyridin
140 ml Chloroform
32,7 g N-Benzyloxycarbonyl-N-octadecyl-3-aminopropanol in 100 ml Chloroform.

Ausbeute: 9,6 g (N-Benzyloxycarbonyl-N-octadecyl-3-aminopropyl)-2-bromethyl-phosphat (Öl).

b) 9,5 g (N-Benzyloxycarbonyl-N-octadecyl-3-aminopropyl)-2-bromethyl-phosphat
45 ml Toluol
5 ml 33%ige ethanolische Trimethylaminlösung.

Ausbeute: 6,5 g mit Schmp. 219-223°C IR (in KBr): 1688 $cm^{-1}$.

Beispiel 13

N-Benzyloxycarbonyl-N-octadecyl-4-aminobutanol-(1)-phosphocholin

analog Beispiel 8 aus:

a) 17,4 g Dichlorphosphorsäure-2-bromethylester
72 ml Pyridin
72 ml Chloroform
17 g N-Benzyloxycarbonyl-N-octadecyl-4-aminobutanol in 40 ml Chloroform.

Ausbeute:6,1 g (N-Benzyloxycarbonyl-N-octadecyl-4-aminobutyl)-2-bromethyl-phosphat (Öl).

b) 6 g (N-Benzyloxycarbonyl-N-octadecyl-4-aminobutyl)-2-bromethyl-phosphat
30 ml Toluol
3 ml 33%ige ethanolische Trimethylaminlösung.
Ausbeute: 4 g mit Schmp. 220°C (Zers.) IR (in KBr): 1694 $cm^{-1}$.

Beispiel 14
N-Benzyloxycarbonyl-N-eicosyl-2-aminoethanol-phosphocholin
analog Beispiel 8 aus:
a) 14,5 g Dichlorphosphorsäure-2-bromethylester
7,5 ml Pyridin
120 ml Chloroform
14,5 g N-Benzyloxycarbonyl-N-eicosyl-2-aminoethanol in 30 ml Chloroform.
Ausbeute: 12,7 g (N-Benzyloxycarbonyl-N-eicosyl-2-aminoethyl)-2-bromethyl-phosphat (Öl).
b) 12.6 g (N-Benzyloxycarbonyl-N-eicosyl-2-aminoethyl)-2-bromethyl-phosphat
60 ml Toluol
20 ml 33%ige ethanolische Trimethylaminlösung.
Ausbeute:11,4 g mit Schmp. 210°C (Zers.) IR (in KBr): 1694 $cm^{-1}$.

Beispiel 15
(N-Benzyl-N-octadecyl-2-aminoethyl)-2-triethylammonioethylphosphat
analog Beispiel 8b aus
11,8 g (N-Benzyl-N-octadecyl-2-aminoethyl)-2-bromethyl-phosphat
60 ml Toluol
5 ml Triethylamin und 10 ml 2-Propanol.
Ausbeute: 10,2 g mit Schmp. 215–216°C.

Beispiel 16
(N-Benzyl-n-octadecyl-2-aminoethyl)-2-dimethylammonioethylphosphat
analog Beispiel 8b aus:
11,8 g (N-Benzyl-N-octadecyl-2-aminoethyl)-2-bromethyl-phosphat
60 ml Toluol und 30 ml 2-Propanol
10 ml 40%ige wässrige Dimethylaminlösung.
Ausbeute: 9,5 g mit Schmp. 210°C.

C. Herstellung der Phospholipide der Formel X

Beispiel 17
2-Methylamino-ethanol-phosphocholin.
8 g N-Benzyloxycarbonyl-N-methyl-2-aminoethanol-phosphocholin werden in 60 ml Dioxan und 15 ml Wasser gelöst, die Lösung mit 0,8 g 10%iger Palladium-/Aktivkohle versetzt und die Reaktionsmischung mit Wasserstoff hydriert. Nach Ende der $H_2$-Aufnahme wird die Lösung filtriert und das Filtrat im Vakuum zur Trockene eingeengt.
Ausbeute: 5 g wachsartige Substanz.

Beispiel 18
2-Undecylamino-ethanol-phosphocholin
analog Beispiel 17 aus:
14 g N-Benzyloxycarbonyl-N-undecyl-2-aminoethanol-phosphocholin und
1,4 g Pd-Aktivkohle in Dioxan/Wasser = 4:1 (V/V).
Ausbeute: 9,2 g mit Schmp. 205–208°C.

Beispiel 19
2-Hexadecylamino-ethanol-phosphocholin
analog Beispiel 17 aus:
6,9 g N-Benzyloxycarbonyl-N-hexadecyl-2-aminoethanol-phosphocholin und
0,7 g Pd-Aktivkohle in Dioxan/Wasser = 4:1 (V/V).
Ausbeute: 5,2 g mit Schmp. 203–207°C (Zers.).

Beispiel 20
2-Octadecylamino-ethanol-phosphocholin
analog Beispiel 17 aus:
6,4 g N-Benzyl-N-octadecyl-2-aminoethanol-phosphocholin und
0,6 g Pd-Aktivkohle in Dioxan/Wasser = 4:1 (V/V).
Ausbeute: 5 g mit Schmp. 210–212°C.

Beispiel 21
3-Octadecylamino-propanol-phosphocholin
analog Beispiel 17 aus:
6,2 g N-Benzylocycarbonyl-N-octadecyl-3-aminopropanol-phosphocholin und
0,6 g Pd-Aktivkohle in Dioxan/Wasser = 4:1 (V/V).
Ausbeute: 4,4 g mit Schmp. 227–229°C.

Beispiel 22
4-Octadecylamino-butanol-phosphocholin
analog Beispiel 17 aus:
3,7 g N-Benzyloxycarbonyl-N-octadecyl-4-aminobutanol-phosphocholin und
0,4 g Pd-Aktivkohle in Dioxan/Wasser = 4:1 (V/V).
Ausbeute: 2,2 g mit Schmp. 208–210°C.

Beispiel 23
2-Eicosylamino-ethanol-phosphocholin
analog Beispiel 17 aus:
11 g N-Benzyloxycarbonyl-N-eicosyl-2-aminoethanol-phosphocholin und
1,1 g Pd-Aktivkohle in Dioxan/Wasser = 4:1 (V/V).
Ausbeute: 7,4 g mit Schmp. 214–219°C.

Beispiel 24
(N-Octadecyl-2-aminoethyl)-2-triethylammonioethyl-phosphat
analog Beispiel 17 aus:
10 g (N-Benzyl-N-octadecyl-2-aminoethyl)-2-triethylammonioethyl-phosphat und
1 g Pd-Aktivkohle in Dioxan/Wasser = 4:1 (V/V).
Ausbeute: 8,1 g mit Schmp. 218–219°C.

Beispiel 25
(N-Octadecyl-2-aminoethyl)-2-dimethylammonioethyl-phosphat
analog Beispiel 17 aus:

9,3 g (N-Benzyl-N-octadecyl-2-aminoethyl)-2-dimethylammonioethyl-phosphat und
0,9 g Pd-Aktivkohle in Dioxan/Wasser = 4:1 (V/V).
Ausbeute: 7,5 g mit Schmp. 220–223°C.

D. Herstellung der Phospholipide der Formel I

Beispiel 26
2-(3-Ethyl-1-octadecylureido)-ethanol-phosphocholin.
0,5 g 2-Octadecylamino-ethanol-phosphocholin werden in 10 ml Chloroform gelöst, die Lösung mit 0,14 g Ethylisocyanat und einigen Tropfen Dimethylformamid versetzt und ca. 4 h bei Raumtemperatur gerührt. Die Lösung wird im Vakuum eingeengt und der Rückstand durch Säulenchromatographie (Kieselgel//Chloroform/Methanol/Wasser) gereinigt.
Ausbeute: 0,43 g mit Schmp. 214–215°C
IR (in KBr): 1630, 1535 $cm^{-1}$.

Beispiel 27
2-(3-Methyl-1-octadecylureido)-ethanol-phosphocholin
analog Beispiel 26 aus:
0,5 g 2-Octadecylamino-ethanol-phosphocholin
0,11 g Methylisocyanat
10 ml Chloroform.
Ausbeute: 0,35 g mit Schmp. 219–220°C
IR (in KBr): 1625, 1540 $cm^{-1}$.

Beispiel 28
2-(3-Metyhl-1-octadecylthioureido)-ethanol-phosphocholin
analog Beispiel 26 aus:
0,5 g 2-Octadecylamino-ethanol-phosphocholin
0,15 g Methylisothiocyanat
10 ml Chloroform.
Ausbeute: 0,41 g mit Schmp. 215–217°C.

Beispiel 29
2-(3,3-Dimethyl-1-octadecylureido)-ethanol-phosphocholin.
0,5 g 2-Octadecylamino-ethanol-phosphocholin werden in 10 ml Chloroform gelöst, die Lösung mit 0,21 g Dimethylcarbamidsäurechlorid und 0,14 g Silbercarbonat versetzt und ca. 12 h bei Raumtemperatur gerührt. Die Lösung wird im Vakuum eingeengt und der Rückstand durch Säulenchromatographie (Kieselgel/Chloroform/Methanol/Wasser) gereinigt.
Ausbeute: 0,31 g mit Schmp. 215–216°c
IR (in KBr) 1634 $cm^{-1}$.

Beispiel 30
2-(3-Butyl-1-octadecylureido)-ethanol-phosphocholin
analog Beispiel 26 aus:
0,5 g 2-Octadecylamino-ethanol-phosphocholin
0,2 g Butylisocyanat
10 ml Chloroform.
Ausbeute: 0,38 g mit Schmp. 208–210°C
IR (in KBr): 1625, 1530 $cm^{-1}$.

Beispiel 31
2-(3-Hexadecyl-1-octadecylureido)-ethanol-phosphocholin
analog Beispiel 26 aus:
0,5 g 2-Octadecylamino-ethanol-phosphocholin
0,6 g Hexadecylisocyanat
10 ml Chloroform.
Ausbeute: 0,63 g mit Schmp. 200–203°C
IR (in KBr): 1625, 1535 $cm^{-1}$.

Beispiel 32
2-(3-Benzyl-1-octadecylureido)-ethanol-phosphocholin
analog Beispiel 26 aus:
0,5 g 2-Octadecylamino-ethanol-phosphocholin
0,27 g Benzylisocyanat
10 ml Chloroform.
Ausbeute: 0,42 g mit Schmp. 221–222°C.

Beispiel 33
2-(3-Methyl-1-undecylureido)-ethanol-phosphocholin
analog Beispiel 26 aus:
0,5 g 2-Undecylamino-ethanol-phosphocholin
0,15 g Methylisocyanat
10 ml Chloroform.
Ausbeute: 0,3 g wachsartige Substanz mit Klarpunkt ~185°C
IR (in KBr): 1629, 1540 $cm^{-1}$.

Beispiel 34
2-(3-Ethyl-1-undecylureido)-ethanol-phosphocholin
analog Beispiel 26 aus:
0,5 g 2-Undecylamino-ethanol-phosphocholin
0,18 g Ethylisocyanat
10 ml Chloroform.
Ausbeute: 0,3 g wachsartige Substanz mit Klarpunkt ~180–183°C
IR (in KBr): 1626, 1536 $cm^{-1}$.

Beispiel 35
2-(3,3-Dimethyl-1-undecylureido)-ethanol-phosphocholin
analog Beispiel 29 aus:
0,5 g 2-Undecylamino-ethanol-phosphocholin
0,28 g Dimethylcarbamidsäurechlorid
0,18 g Silbercarbonat
10 ml Chloroform.
Ausbeute: 0,32 wachsartige Substanz mit Klarpunkt: 203–204°C
IR (in KBr): 1634 $cm^{-1}$.

Beispiel 36
2-(3-Methyl-1-undecylthioreido)-ethanol-phosphocholin
analog Beispiel 26 aus:
0,5 g 2-Undecylamino-ethanol-phosphocholin
0,19 g Methylisothiocyanat
10 ml Chloroform.
Ausbeute: 0,33 g wachsartige Substanz mit Klarpunkt ~165°C.

Beispiel 37

2-(3-Phenyl-1-undecylureido)-ethanol-phosphocholin
analog Beispiel 26 aus:
0,5 g 2-Undecylamino-ethanol-phosphocholin
0,31 g Phenylisocyanat
10 ml Chloroform.
Ausbeute: 0,61 g wachsartige Substanz
IR (in KBr): 1649, 1538 $cm^{-1}$.

Beispiel 38

2-(3-Benzyl-1-undecylureido)-ethanol-phosphocholin
analog Beispiel 26 aus:
1,5 g 2-Undecylamino-ethanol-phosphocholin
1,1 g Benzylisocyanat
30 ml Chloroform.
Ausbeute: 1,7 g wachsartige Substanz
IR (in KBr): 1533, 1628 $cm^{-1}$.

Beispiel 39

2-(3-Hexadecyl-1-undecylureido)-ethanol-phosphocholin
analog Beispiel 26 aus:
0,5 g 2-Undecylamino-ethanol-phosphocholin
0,7 g Hexadecylisocyanat
10 ml Chloroform.
Ausbeute: 0,69 mit Schmp. 196–199°C
IR (in KBr): 1622, 1533 $cm^{-1}$.

Beispiel 40

2-(3-Oleyl-1-undecylureido)-ethanol-phosphocholin
analog Beispiel 26 aus:
0,5 g 2-Undecylamino-ethanol-phosphocholin
0,8 g Oleylisocyanat
10 ml Chloroform unter Stickstoff.
Ausbeute: 0,61 g wachsartige Substanz.

Beispiel 41

2-(1-Hexadecyl-3-methylureido)-ethanol-phosphocholin
analog Beispiel 26 aus:
0,3 g 2-Hexadecylamino-ethanol-phosphocholin
0,08 g Methylisocyanat
5 ml Chloroform.
Ausbeute: 0,22 g mit Schmp. 215–218°C
IR (in KBr): 1635, 1540 $cm^{-1}$.

Beispiel 42

2-(3-Ethyl-1-hexadecylureido)-ethanol-phosphocholin
analog Beispiel 26 aus:
0,5 g 2-Hexadecylamino-ethanol-phosphocholin
0,15 g Ethylisocyanat
10 ml Chloroform.
Ausbeute: 0,45 g mit Schmp. 213–217°C.

Beispiel 43

2-(1-Hexadecyl-3-methylthioureido)-ethanol-phosphocholin
analog Beispiel 26 aus:
0,5 g 2-Hexadecylamino-ethanol-phosphocholin
0,16 g Methylisothiocyanat
10 ml Chloroform.
Ausbeute: 0,2 g mit Schmp. 210–212°C.

Beispiel 44

2-(3,3-Dimethyl-1-hexadecylureido)-ethanol-phosphocholin
analog Beispiel 29 aus:
0,3 g 2-Hexadecylamino-ethanol-phosphocholin
0,24 g Dimethylcarbamidsäurechlorid
0,1 g Silbercarbonat
5 ml Chloroform.
Ausbeute: 0,15 g mit Schmp. 208–211°C
IR (in KBr): 1635 $cm^{-1}$.

Beispiel 45

3-(3-Methyl-1-octadecylureido)-propanol-(1)-phosphocholin
analog Beispiel 26 aus:
0,5 g 3-Octadecylamino-propanol-(1)-phosphocholin
0,11 g Methylisocyanat
10 ml Chloroform.
Ausbeute: 0,43 g mit Schmp. 221–224°C
IR (in KBr): 1628, 1540 $cm^{-1}$.

Beispiel 46

3-(3-Ethyl-1-octadecylureido)-propanol-(1)-phosphocholin
analog Beispiel 26 aus:
0,5 g 3-Octadecylamino-propanol-(1)-phosphocholin
0,14 g Ethylisocyanat
10 ml Chloroform.
Ausbeute: 0,3 g mit Schmp. 215–218°C
IR (in KBr): 1626, 1535 $cm^{-1}$.

Beispiel 47

3-(3,3-Dimethyl-1-octadecylureido)-propanol-(1)-phosphocholin
analog Beispiel 29 aus:
0,5 g 3-Octadecylamino-propanol-(1)-phosphocholin
0,18 g Dimethylcarbamidsäurechlorid
0,14 g Silbercarbonat
10 ml Chloroform.
Ausbeute: 0,28 g mit Schmp. 224–225°C
IR (in KBr): 1633 $cm^{-1}$.

Beispiel 48

3-(3-Methyl-1-octadecylthioureido)-propanol-(1)-phosphocholin
analog Beispiel 26 aus:
0,5 g 3-Octadecylamino-propanol-(1)-phosphocholin
0,15 g Methylisothiocyanat
10 ml Chloroform.
Ausbeute: 0,36 g mit Schmp. 210–212°C.

Beispiel 49

4-(3-Methyl-1-octadecylureido)-butanol-(1)-phosphocholin
analog Beispiel 26 aus:
0,5 g 4-Octadecylamino-butanol-(1)-phosphocholin
0,11 g Methylisocyanat
10 ml Chloroform.

Ausbeute: 0,4 g mit Schmp. 226–230°C
IR (in KBr): 1629, 1541 $cm^{-1}$.

Beispiel 50
4-(3-Ethyl-1-octadecylureido)-butanol-(1)-phosphocholin
analog Beispiel 26 aus:
0,3 g 4-Octadecylamino-butanol-(1)-phosphocholin
0,1 g Ethylisocyanat
5 ml Chloroform.
Ausbeute: 0,25 g mit Schmp. 215–216°C
IR (in KBr): 1623, 1532 $cm^{-1}$.

Beispiel 51
4-(3,3-Dimethyl-1-octadecyl)-butanol-(1)-phosphocholin
ananolg Beispiel 29 aus:
0,3 g 4-Oxtadecylamino-butanol-(1)-phosphocholin
0,13 g Dimethylcarbamidsäurechlorid
0,1 g Silbercarbonat
5 ml Chloroform.
Ausbeute: 0,15 g mit Schmp. 234–236°C
IR (in KBr): 1632 $cm^{-1}$.

Beispiel 52
4-(3-Methyl-1-octadecylthioureido)-butanol-(1)-phosphocholin
analog Beispiel 26 aus:
0,3 g 4-Octadecylamino-butanol-(1)-phosphocholin
0,1 g Methylisothiocyanat
10 ml Chloroform.
Ausbeute: 0,21 g mit Schmp. 221–224°C.

Beispiel 53
2-(1-Eicosyl-3-methylureido)-ethanol-phosphocholin
analog Beispiel 26 aus:
0,5 g 2-Eicosylamino-ethanol-phosphocholin
0,11 g Methylisocyanat
10 ml Chloroform.
Ausbeute: 0,35 g mit Schmp. 222–224°C.

Beispiel 54
2-(1-Eicosyl-3-ethylureido)-ethanol-phosphocholin
analog Beispiel 26 aus:
0,5 g 2-Eicosylamino-ethanol-phosphocholin
0,14 g Ethylisocyanat
10 ml Chloroform.
Ausbeute: 0,4 g mit Schmp. 218–220°C.

Beispiel 55
2-(3,3-Dimethyl-1-eicosylureido)-ethanol-phosphocholin
analog Beispiel 29 aus:
0,5 g 2-Eicosylamino-ethanol-phosphocholin
0,21 g Dimethylcarbamidsäurechlorid
0,14 g Silbercarbonat
10 ml Chloroform.
Ausbeute: 0,3 g mit Schmp. 215–217°C.

Beispiel 56
2-(1-Eicosyl-3-methylthioureido)-ethanol-phosphocholin
analog Beispiel 26 aus:
0,5 g 2-Eicosylamino-ethanol-phosphocholin
0,15 g Methylisothiocyanat
10 ml Chloroform.
Ausbeute: 0,3 g mit Schmp. 210–211°C.

Beispiel 57
2-(1-Undecylureido)-ethanol-phosphocholin
analog Beispiel 17 aus:
1,2 g 2-(3-Benzyl-1-undecylureido)-ethanol-phosphocholin und
0,72 g Pd-Aktivkohle, die in 6 Portionen innerhalb von 20 h zugegeben werden, in Dioxan/Wasser = 4:1 (V/V).
Ausbeute: 0.5 g wachsartige Substanz
IR (in KBr): 1652, 1597 $cm^{-1}$.

Beispiel 58
[2-(3-Methyl-1-octadecylureido)-ethyl]-(2-triethylammonioethyl)-phosphat
analog Beispiel 26 aus:
0,5 g (N-Octadecyl-2-aminoethyl)-2-triethylammonioethyl-phosphat
0,11 g Methylisocyanat
10 ml Chloroform,
Ausbuete: 0,41 g mit Schmp. 220–221°C.

Beispiel 59
[2-(3-Methyl-1-octadecylureido)-ethyl]-(2-dimethylammonioethyl)-phosphat
analog Beispiel 26 aus:
0,5 g (N-Octadecyl-2-aminoethyl)-2-dimethylammonioethyl-phosphat
0,11 g Methylisocyanat
10 ml Chloroform.
Ausbeute: 0,35 g mit Schmp. 215–216°C.

Beispiel 60
2-(3-Hexadecyl-1-methylureido)-ethanol-phosphocholin.
0,5 g 2-Methylamino-ethanol-phosphocholin werden in 10 ml N-Methylacetamid gelöst, die Lösung mit 1,08 g Hexadecylisocyanat versetzt und 24 h bei Raumtemperatur gerührt. Die Lösung wird im Vakuum eingeengt und der Rückstand durch Säulenchromatographie (Kieselgel// Chloroform/Methanol/Wasser)
gereinigt.
Ausbeute: 0,3 g mit Schmp. 210–213°C.
Analog Beispiel 60 werden hergestellt:
2-(1-Methyl-3-octadecylureido)-ethanol-phosphocholin
2-(3-Eicosyl-1-methylureido)-ethanol-phosphocholin
2-(1-Methyl-3-oleylureido)-ethanol-phosphocholin

Beispiel 61
N-Methoxycarbonyl-N-octadecyl-2-aminoethanol-(1)-phosphocholin.
50 mg N-Octadecyl-2-aminoethanol-(1)-phosphocholin werden in 2 ml Chloroform gelöst,

20 mg Chlorameisensäuremethylester und 5 Tropfen Triethylamin hinzugefügt. Die Mischung wird eine Stunde bei Raumtemperatur gerührt, im Vakuum eingeengt und der Rückstand durch Säulenchromatographie (Kieselgel//Chloroform/ Methanol/Wasser) gereinigt.

Ausbeute: 41 mg wachsartige Substanz
IR (in KBr): 1692 $cm^{-1}$.

Beispiel 62

N-Ethoxycarbonyl-N-octadecyl-2-aminoethanol-(1)-phosphocholin
anaolg Beispiel 61 aus:
50 mg N-Octadecyl-2-aminoethanol-(1)-phosphocholin
20 mg Chlorameisensäureethylester
5 Tropfen Triethylamin
in 2 ml Chloroform.

Ausbeute: 39 mg wachsartige Substanz
IR (in KBr): 1690 $cm^{-1}$.

Beispiel 63

N-Benzyloxycarbonyl-N-octadecyl-2-aminoethanol-(1)-phosphocholin analog Beispiel 61 aus:
50 mg N-Octadecyl-2-aminoethanol-(1)-phosphocholin
34 mg Chlorameisensäurebenzylester
5 Tropfen Triethylamin
in 2 ml Chloroform.

Ausbeute: 55 mg mit Schmp. 211°C.

**Patentansprüche für die Vertragsstaaten: BE/ CH-LI/DE/FR/GB/JT/SE/LU/NL/**

1. Substituierte Aminoalkanolphospholipide der allgemeinen Formel I

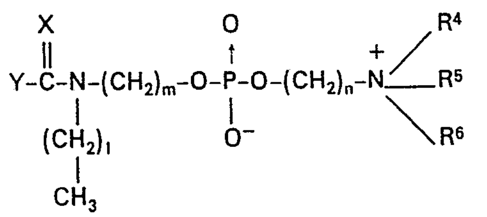

I

worin
X ein Sauerstoff- oder Schwefelatom und
Y den Rest $-NR^1R^2$ oder $-OR^3$ bedeutet,
wobei
$R^1$, $R^2$ gleich oder voneinander verschieden sein können und einen gesättigten oder ungesättigten, geradkettigen oder verzweigten Alkylrest mit 1-20 Kohlenstoffatomen, einen Benzylrest, Phenylrest oder Wasserstoff
$R^3$ Phenyl, Benzyl oder $C_{1-4}$-Alkyl
$R^4$, $R^5$, $R^6$ gleich oder voneinander verschieden sein können und Wasserstoff oder einen niederen Alkylrest mit 1-4 Kohlenstoffatomen
l eine ganze Zahl von 0-19
m eine ganze Zahl von 2-6
n eine ganze Zahl von 2-4 bedeuten.

2. Substituierte Aminoalkanolphospholipide gemäss Anspruch 1, dadurch gekennzeichnet, dass
X ein Sauerstoff- oder Schwefelatom und
Y den Rest $-NR^1R^2$ bedeutet,
wobei
$R^1$, $R^2$ gleich oder voneinander verschieden sein können und einen gesättigten oder ungesättigten, geradkettigen oder verzweigten Alkylrest mit 1-20 Kohlenstoffatomen, einen Benzylrest, Phenylrest oder Wasserstoff
$R^4$, $R^5$, $R^6$ gleich oder voneinander verschieden sein können und Wasserstoff oder einen niederen Alkylrest mit 1-4 Kohlenstoffatomen
l eine ganze Zahl von 0-19
m eine ganze Zahl von 2-6
n eine ganze Zahl von 2-4 bedeuten.

3. Substituierte Aminoalkanolphosphocholine gemäss Anspruch 1, dadurch gekennzeichnet, dass
X ein Sauerstoff- oder Schwefelatom und
Y den Rest $NR^1R^2$ bedeutet,
wobei
$R^1$, $R^2$ gleich oder voneinander verschieden sein können und einen Alkylrest mit 1-20 Kohlenstoffatomen
$R^4$, $R^5$, $R^6$ je eine Methylgruppe
l eine ganze Zahl von 0-19
m eine ganze Zahl von 2-6 und
n 2 bedeuten.

4. Substituierte Aminoalkanolphospholipide gemäss Anspruch 1, dadurch gekennzeichnet, dass
X ein Sauerstoffatom und
Y den Rest $-OR^3$ bedeutet,
wobei
$R^3$ Phenyl, Benzyl oder $C_{1-4}$-Alkyl
$R^4$, $R^5$, $R^6$ gleich oder voneinander verschieden sein können und Wasserstoff oder einen niederen Alkylrest mit 1-4 Kohlenstoffatomen
l eine ganze Zahl von 0-19
m eine ganze Zahl von 2-6
n eine ganze Zahl von 2-4 bedeuten.

5. Substituierte Aminoalkanolphosphocholine gemäss Anspruch 1, dadurch gekennzeichnet, dass
X ein Sauerstoffatom und
Y den Rest $-OR^3$ bedeutet,
wobei
$R^3$ Benzyl oder $C_{1-4}$-Alkyl
$R^4$, $R^5$, $R^6$ je eine Methylgruppe
l eine ganze Zahl von 0-19
m eine ganze Zahl von 2-6 und
n 2 bedeuten.

6. Verfahren zur Herstellung von Verbindungen gemäss den Ansprüchen 1-3, dadurch gekennzeichnet, dass man in an sich bekannter Weise Verbindungen der allgemeinen Formel X

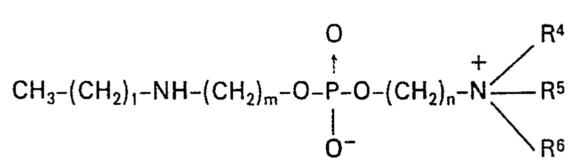

worin $R^4$, $R^5$, $R^6$, l, m, n die in Formel I angegebenen Bedeutungen besitzen, mit Kohlensäurederivaten der Formel XI oder XII

$R^1-N=C=X$ XI

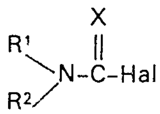 XII

worin $R^1$, $R^2$, X die in Formel I angegebenen Bedeutungen haben, in Substanz oder in einem beliebigen, indifferenten organischen Lösungsmittel, ggfs. unter Zusatz eines Katalysators oder einer Hilfsbase, insbesondere bei Verwendung von Verbindungen der Formel XII, umsetzt.

7. Verfahren zur Herstellung von Verbindungen gemäss den Ansprüchen 1-3, dadurch gekennzeichnet, dass man N-Alkylaminoalkanole der allgemeinen Formel II

$CH_3-(CH_2)_l-NH-(CH_2)_m-OH$ II

mit Benzylhalogeniden oder Chlorameisensäurebenzylester zu Verbindungen der Formel III umsetzt,

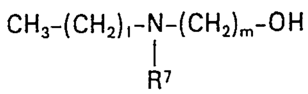 III

wobei $R^7$ einen durch Hydrierung abspaltbaren Rest, wie z.B. Benzyl oder Benzyloxycarbonyl, darstellt und die Verbindungen III nach an sich bekannten Verfahren durch Umsetzung mit Dichlorphosphorsäure-ω-halogenalkylestern phosphoryliert und nachfolgend durch Reaktion mit Aminen $NR^4R^5R^6$ zu den Verbindungen der Formel IV umsetzt,

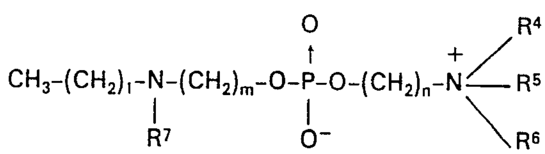 IV

die nach an sich bekannten Verfahren zu den Verbindungen der Formel X hydriert und mit den Kohlensäurederivaten der Formel XI oder XII umgesetzt werden.

8. Verfahren zur Herstellung von Verbindungen gemäss den Ansprüchen 1-3 mit $R^1=R^2=H$ und $X=O$ in Formel I, dadurch gekennzeichnet, dass man Verbindungen der Formel I mit $R^1$ = Benzyl, $R^2$ = H und X = O in einem indifferenten organischen Lösungsmittel in Anwesenheit eines üblichen Hydrierkatalysators hydriert.

9. Verfahren zur Herstellung von Verbindungen der Formel X gemäss Anspruch 6, dadurch gekennzeichnet, dass man die Verbindungen der Formel IV

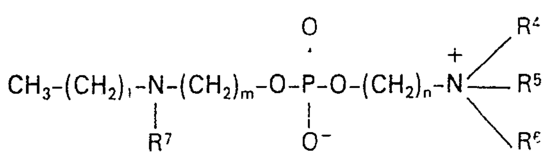 IV

worin $R^4$, $R^5$, $R^6$, l, m, n die in Formel I angegebenen Bedeutungen besitzen und $R^7$ einen durch Hydrierung abspaltbaren Rest, wie z.B. Benzyl oder Benzyloxycarbonyl darstellt, in einem indifferenten organischen Lösungsmittel unter Anwendung eines der üblichen Hydrierkatalysatoren hydriert.

10. Verfahren zur Herstellung der Verbindungen der Formel IV gemäss Anspruch 7, dadurch gekennzeichnet, dass man N,N-disubstituierte Aminoalkohole der Formel III

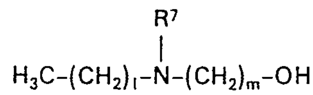 III

worin l, m und $R^7$ die in Formel IV angegebene Bedeutung besitzen, mit einem Dichlorphosphorsäure-ω-halogenalkylester der Formel V

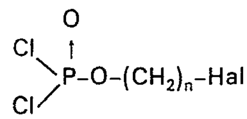 V

wobei n die in Formel I angegebene Bedeutung hat und Hal ein Chlor- oder Bromatom bedeutet, in einem indifferenten organischen Lösungsmittel, ggfs. unter Anwendung einer Hilfsbase, phosphoryliert und nachfolgend mit einem Amin der Formel VI

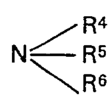 VI

worin $R^4$, $R^5$, $R^6$ die in Formel I angegebenen Bedeutungen besitzen, in einem indifferenten organischen Lösungsmittel, ggfs. unter Druck, umsetzt.

11. Verfahren zur Herstellung von Verbindungen der Formel IV gemäss Anspruch 7, dadurch gekennzeichnet, dass man Verbindungen der Formel III gemäss Anspruch 10 mit Phosphoroxytrichlorid phosphoryliert und nachfolgend mit einem Alkandiol der Formel VII

$HO-(CH_2)_n-OH$ VII

in der n die in Formel I angegebene Bedeutung besitzt, ggfs. unter Einsatz von Hilfsbasen und inerten Lösungsmitteln zu den cyclischen Phosphorverbindungen der Formel VIII

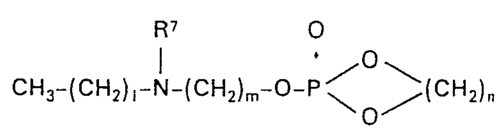 VIII

worin l, m, n die in Formel I und $R^7$ die in Formel IV angegebenen Bedeutungen haben und dann die Verbindungen VIII mit einem Amin der Formel VI gemäss Anspruch 10 in einem organischen Lösungsmittel, gegebenenfalls unter Druck, reagieren lässt.

12. Verfahren zur Herstellung von Verbindungen der Formel VIII gemäss Anspruch 11, dadurch gekennzeichnet, dass man Verbindungen der Formel III gemäss Anspruch 10 mit einer cyclischen Phosphorverbindung der Formel IX

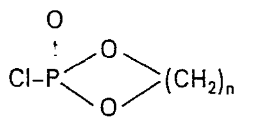

IX

worin n die in Formel I angegebene Bedeutung hat, in einem indifferenten organischen Lösungsmittel unter Zusatz einer Hilfsbase umsetzt.

13. Verfahren zur Herstellung der Verbindungen der Formel III gemäss Anspruch 10, dadurch gekennzeichnet, dass man N-Alkyl-aminoalkanole der Formel II

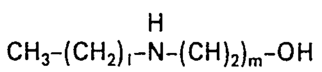

II

worin l und m die in Formel I angegebenen Bedeutungen besitzen, mit einem Benzylhalogenid oder Chlorameisensäurebenzylester in einem inerten organischen Medium, ggfs. unter Zusatz einer Hilfsbase, umsetzt.

14. Verfahren zur Herstellung von Verbindungen gemäss den Ansprüchen 1, 4-5, dadurch gekennzeichnet, dass man disubstituierte Aminoalkohole der Formel XIII

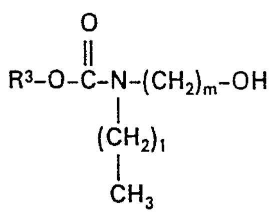

XIII

worin $R^3$, l, und m die in Formel I angegebenen Bedeutungen besitzen, mit einem Dichlorphosphorsäure-ω-halogenalkylester der Formel V in einem indifferenten organischen Lösungsmittel, ggfs. unter Anwendung einer Hilfsbase, phosphoryliert und nachfolgend mit einem Amin der Formel IV gemäss Anspruch 10 in einem indifferenten organischen Lösungsmittel, ggfs. unter Druck, umsetzt.

15. Verfahren zur Herstellung von Verbindungen gemäss den Ansprüchen 1, 4-5, dadurch gekennzeichnet, dass man Verbindungen der Formel XIII gemäss Anspruch 14 durch Phosphorylierung mit Phosphoroxytrichlorid und nachfolgende Umsetzung mit einem Alkandiol der Formel VII gemäss Anspruch 11 ggfs. unter Einsatz von Hilfsbasen und inerten Lösungsmitteln zu den cyclischen Phosphorverbindungen der Formel XIV

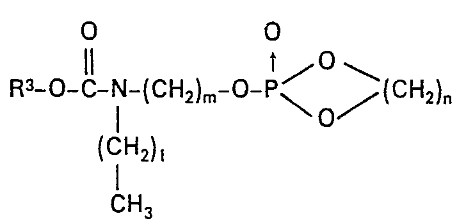

XIV

worin $R^3$, l, m und n die in Formel I angegebenen Bedeutungen besitzen, umsetzt und nachfolgend die Verbindung XIV mit einem Amin der Formel VI gemäss Anspruch 10 in einem organischen Lösungsmittel, ggfs. unter Druck, reagieren lässt.

16. Verfahren zur Herstellung von Verbindungen gemäss den Ansprüchen 1, 4-5, dadurch gekennzeichnet, dass man Verbindungen der Formel XIII gemäss Anspruch 14 mit cyclischen Phosphorverbindungen der Formel IX gemäss Anspruch 12 in einem indifferenten organischen Lösungsmittel unter Zusatz einer Hilfsbase umsetzt.

17. Verfahren zur Herstellung von Verbindungen der Formel XIII gemäss Anspruch 14, dadurch gekennzeichnet, dass man N-Alkyl-aminoalkanole der Formel II gemäss Anspruch 7 mit Chlorameisensäureestern in einem inerten organischen Medium, ggfs. unter Zusatz einer Hilfsbase, umsetzt.

18. Verfahren zur Herstellung von Verbindungen gemäss den Ansprüchen 1, 4-5, dadurch gekennzeichnet, dass man Aminoalkanolphospholipide der Formel X gemäss Anspruch 6 mit Chlorameisensäureestern in einem inerten organischen Medium, ggfs. unter Zusatz einer Hilfsbase, umsetzt.

**Patentansprüche (für den Vertragsstaat Österreich)**

1. Verfahren zur Herstellung von substituierten Aminoalkanolphospholipiden der allgemeinen Formel I

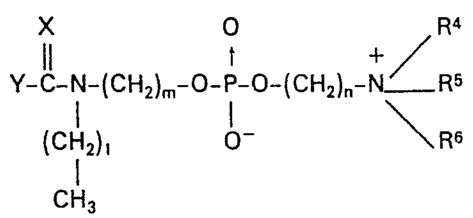

I

worin
X ein Sauerstoff- oder Schwefelatom und
Y den Rest $-NR^1R^2$ oder $-OR^3$ bedeutet,
wobei
$R^1$, $R^2$ gleich oder voneinander verschieden sein können und einen gesättigten oder ungesättigten, geradkettigen oder verzweigten Alkylrest mit 1-20 Kohlenstoffatomen, einen Benzylrest, Phenylrest oder Wasserstoff,
$R^3$ Phenyl, Benzyl oder $C_{1-4}$-Alkyl,
$R^4$, $R^5$, $R^6$ gleich oder voneinander verschieden sein können und Wasserstoff oder einen niederen Alkylrest mit 1-4 Kohlenstoffatomen,
l eine ganze Zahl von 0-19,
m eine ganze Zahl von 2-6,
n eine ganze Zahl von 2-4,
bedeuten, dadurch gekennzeichnet, dass man in an sich bekannter Weise Verbindungen der allgemeinen Formel X

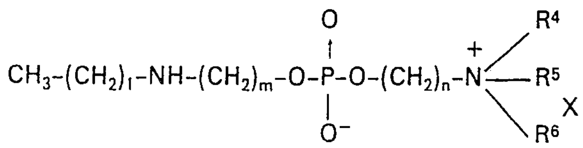

worin $R^4$, $R^5$, $R^6$, l, m, n die in Formel I angegebenen Bedeutungen besitzen, mit Kohlensäurederivaten der Formel XI oder XII

$R^1-N=C=X$ XI

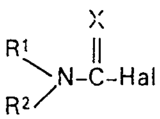 XII

worin $R^1$, $R^2$, X die in Formel I angegebenen Bedeutungen haben, in Substanz oder in einem beliebigen, indifferenten organischen Lösungsmittel, ggfs. unter Zusatz eines Katalysators oder einer Hilfsbase, insbesondere bei Verwendung von Verbindungen der Formel XII, umsetzt, oder dass man N-Alkylaminoalkanole der allgemeinen Formel II

$CH_3-(CH_2)_l-NH-(CH_2)_m-OH$ II

mit Benzylhalogeniden oder Chlorameisensäurebenzylester zu Verbindungen der Formel III umsetzt,

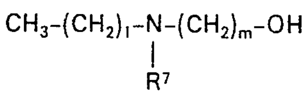 III

wobei $R^7$ einen durch Hydrierung abspaltbaren Rest, wie z.B. Benzyl oder Benzyloxycarbonyl, darstellt und die Verbindungen III nach an sich bekannten Verfahren durch Umsetzung mit Dichlorphosphorsäure-ω-halogenalkylestern phosphoryliert und nachfolgend durch Reaktion mit Aminen $NR^4R^5R^6$ zu den Verbindungen der Formel IV umsetzt,

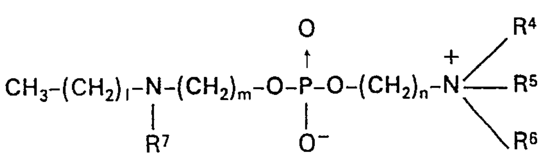 IV

die nach an sich bekannten Verfahren zu den Verbindungen der Formel X hydriert und mit den Kohlensäurederivaten der Formel XI oder XII umgesetzt werden, oder zur Herstellung von Verbindungen gemäss Formel I mit $R^1 = R^2 = H$ und $X = O$, dass man Verbindungen der Formel I mit $R^1$ = Benzyl, $R^2 = H$ und $X = O$ in einem indifferenten organischen Lösungsmittel in Anwesenheit eines üblichen Hydrierkatalysators hydriert.

2. Verfahren zur Herstellung von Verbindungen der Formel X gemäss Anspruch 1, dadurch gekennzeichnet, dass man die Verbindungen der Formel IV

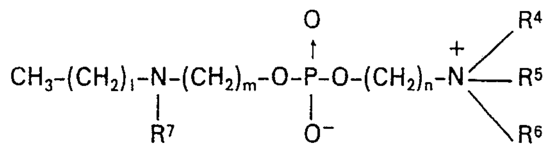 IV

worin $R^4$, $R^5$, $R^6$, l, m, n die in Formel I angegebenen Bedeutungen besitzen und $R^7$ einen durch Hydrierung abspaltbaren Rest, wie z.B. Benzyl oder Benzyloxycarbonyl darstellt, in einem indifferenten organischen Lösungsmittel unter Anwendung eines der üblichen Hydrierkatalysatoren hydriert.

3. Verfahren zur Herstellung der Verbindungen der Formel IV gemäss Anspruch 1, dadurch gekennzeichnet, dass man N-N-disubstituierte Aminoalkohole der Formel III

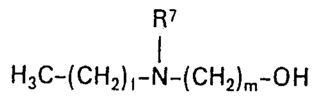 III

worin l, m und $R^7$ die in Formel IV angegebene Bedeutung besitzen, mit einem Dichlorphosphorsäure-ω-halogenalkylester der Formel V

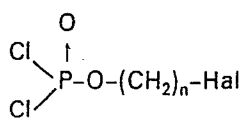 V

wobei n die in Formel I angegebene Bedeutung hat und Hal ein Chlor- oder Bromatom bedeutet, in einem indifferenten organischen Lösungsmittel, ggfs. unter Anwendung einer Hilfsbase, phosphoryliert und nachfolgend mit einem Amin der Formel VI

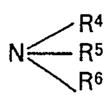 VI

worin $R^4$, $R^5$, $R^6$ die in Formel I angegebenen Bedeutungen besitzen, in einem indifferenten organischen Lösungsmittel, ggfs. unter Druck, umsetzt.

4. Verfahren zur Herstellung von Verbindungen der Formel IV gemäss Anspruch 1, dadurch gekennzeichnet, dass man Verbindungen der Formel III gemäss Anspruch 1 mit Phosphoroxytrichlorid phosphoryliert und nachfolgend mit einem Alkandiol der Formel VII

$HO-(CH_2)_n-OH$ VII

in der n die in Formel I angegebene Bedeutung besitzt, ggfs. unter Einsatz von Hilfsbasen und inerten Lösungsmitteln zu den cyclischen Phosphorverbindungen der Formel VIII

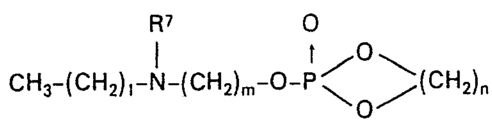 VIII

worin l, m, n die in Formel I und $R^7$ die in Formel IV angegebenen Bedeutungen haben und dann die Verbindungen VIII mit einem Amin der Formel VI gemäss Anspruch 1 in einem organischen Lösungsmittel, gegebenenfalls unter Druck, reagieren lässt.

5. Verfahren zur Herstellung von Verbindungen der Formel VIII gemäss Anspruch 4, dadurch gekennzeichnet, dass man Verbindungen der Formel III gemäss Anspruch 1 mit einer cyclischen Phosphorverbindung der Formel IX

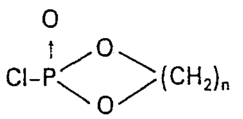 IX

worin n die in Formel I angegebene Bedeutung hat, in einem indifferenten organischen Lösungsmittel unter Zustz einer Hilfsbase umsetzt.

6. Verfahren zur Herstellung der Verbindungen der Formel III gemäss Anspruch 1, dadurch gekennzeichnet, dass man N-Alkyl-aminoalkanole der Formel II

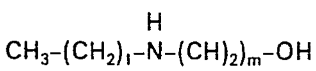 II

worin l und m die in Formel I angegebenen Bedeutungen besitzen, mit einem Benzylhalogenid oder Chlorameisensäurebenzylester in einem inerten organischen Medium, ggfs. unter Zusatz einer Hilfsbase, umsetzt.

7. Verfahren zur Herstellung von Verbindungen gemäss Anspruch 1 mit Y = $OR^3$ in Formel I, dadurch gekennzeichnet, dass man disubstituierte Aminoalkohole der Formel XIII

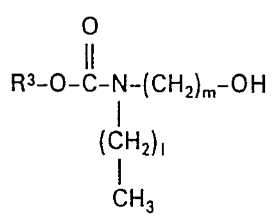 XIII

worin $R^3$, l und m die in Formel I angegebenen Bedeutungen besitzen, mit einem Dichlorphosphorsäure-ω-halogenalkylester der Formel V gemäss Anspruch 1 in einem indifferenten organischen Lösungsmittel, ggfs. unter Anwendung einer Hilfsbase, phosphoryliert und nachfolgend mit einem Amin der Formel VI gemäss Anspruch 1 in einem indifferenten organischen Lösungsmittel, ggfs. unter Druck, umsetzt.

8. Verfahren zur Herstellung von Verbindungen gemäss Anspruch 1 mit Y = $OR^3$ in Formel I, dadurch gekennzeichnet, dass man Verbindungen der Formel XIII gemäss Anspruch 7 durch Phosphorylierung mit Phosphoroxytrichlorid und nachfolgende Umsetzung mit einem Alkandiol der Formel VII gemäss Anspruch 4 ggfs. unter Einsatz von Hilfsbasen und inerten Lösungsmitteln zu den cyclischen Phosphorverbindungen der Formel XIV

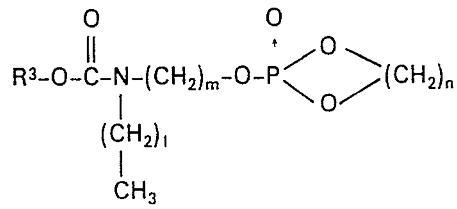 XIV

worin $R^3$, l, m und n die in Formel I angegebenen Bedeutungen besitzen, umsetzt und nachfolgend die Verbindung XIV mit einem Amin der Formel VI gemäss Anspruch 1 in einem organischen Lösungsmittel, ggfs. unter Druck, reagieren lässt.

9. Verfahren zur Herstellung von Verbindungen gemäss Anspruch 1 mit Y = $OR^3$ in Formel I, dadurch gekennzeichnet, dass man Verbindungen der Formel XIII gemäss Anspruch 7 mit cyclischen Phsophorverbindungen der Formel IX gemäss Anspruch 5 in einem indifferenten organischen Lösungsmittel unter Zusatz einer Hilfsbase umsetzt.

10. Verfahren zur Herstellung von Verbindungen der Formel XIII gemäss Anspruch 7, dadurch gekennzeichnet, dass man N-Alkyl-aminoalkanole der Formel II gemäss Anspruch 1 mit Chlorameisensäureestern in einem inerten organischen Medium, ggfs. unter Zusatz einer Hilfsbase, umsetzt.

11. Verfahren zur Herstellung von Verbindungen gemäss Anspruch 1 mit Y = $OR^3$ in Formel I, dadurch gekennzeichnet, dass man Aminoalkanolphospholipide der Formel X gemäss Anspruch 1 mit Chlroameisensäureestern in einem inerten organischen Medium, ggfs. unter Zusatz einer Hilfsbase, umsetzt.

**Claims: for the contracting states: BE/CH/LI/DE/FR/GB/JT/LU/NL/SE**

1. Substituted aminoalkanol phospholipids of the general formula I

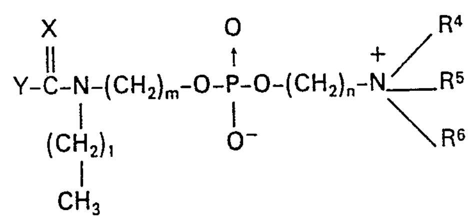 I

in which
X represents an oxygen or a sulphur atom and
Y the radical $-NR^1R^2$ or $-OR^3$,
wherein
$R^1$, $R^2$ can be the same or different and represent a saturated or unsaturated straight-chained or branched alkyl radical having 1 to 20 carbon atoms, a benzyl radical, a phenyl radical or hydrogen,
$R^3$ represents phenyl, benzyl or $C_{1-4}$-alkyl,
$R^4$, $R^5$, $R^6$ can be the same or different and represent hydrogen or a low alkyl radical having 1 to 4 carbon atoms,

l represents an integer from 0 to 19,
m represents an integer from 2 to 6,
n represents an integer from 2 to 4.

2. Substituted aminoalkanol phospholipids according to claim 1 in which
X represents an oxygen or a sulphur atom and
Y the radical $-NR^1R^2$,
wherein
$R^1$, $R^2$ can be the same or different and represent a saturated or an unsaturated, straight-chained or branched alkyl radical having 1 to 20 carbon atoms, a benzyl radical, a phenyl radical or hydrogen,
$R^4$, $R^5$, $R^6$ can be the same or different and represent hydrogen or a low alkyl radical having 1 to 4 carbon atoms,
l represents an integer from 0 to 19,
m represents an integer from 2 to 6, and
n represents an integer from 2 to 4.

3. Substituted aminoalkanol phosphocholines according to claim 1, in which
X represents an oxygen or a sulphur atom and
Y the radical $NR^1R^2$,
wherein
$R^1$, $R^2$ can be the same or different and represent an alkyl radical having 1 to 20 carbon atoms,
$R^4$, $R^5$, $R^6$ each represent a methyl group,
l an integer from 0 to 19,
m an integer from 2 to 6, and
n represents 2.

4. Substituted aminoalkanol phospholipids according to claim 1, in which
X represents an oxygen atom and
Y the radical $-OR^3$,
wherein
$R^3$ represents phenyl, benzyl or $C_{1-4}$-alkyl,
$R^4$, $R^5$, $R^6$ can be the same or different and represent hydrogen or a low alkyl radical having 1 to 4 carbon atoms,
l represents an integer from 0 to 19,
m an integer from 2 to 6, and
n an integer from 2 to 4.

5. Substituted aminoalkanol phosphocholines according to claim 1, in which
X represents an oxygen atom and
Y the radical $-OR^3$,
wherein
$R^3$ represents benzyl or $C_{1-4}$-alkyl,
$R^4$, $R^5$, $R^6$ each represent a methyl group,
l represents an integer from 0 to 19,
m an integer from 2 to 6, and
n represents 2.

6. A method of producing compounds according to any of claims 1 to 3, in which compounds of the general formula X

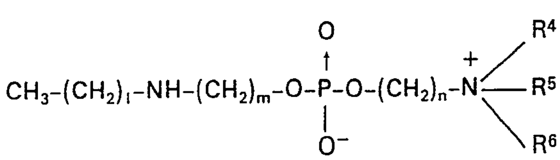 X

wherein $R^4$, $R^5$, $R^6$, l, m, n represent the same as in formula I, are reacted in a manner known per se with carbonic acid derivatives of formula XI or XII

$R^1-N=C=X$ XI

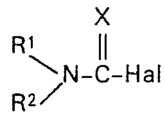 XII

wherein $R^1$, $R^2$, X represent the same as in Formula I, with or without the presence of an inert organic solvent, possibly with the addition of a catalyst or of an auxiliary base, in particular when compounds of formula XII are used.

7. A method of producing compounds according to any of claims 1 to 3, in which N-alkyl-aminoalkanols of the general formula II

$CH_3-(CH_2)_l-NH-(CH_2)_m-OH$ II

are reacted with benzyl halides or chloroformic acid benzyl esters to form compounds of formula III

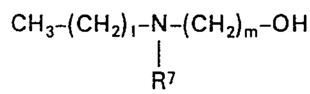 III

wherein $R^7$ represents a radical which may be separated by hydrogenation such as, for exemple, benzyl or benzyloxy carbonyl, and the compounds III are phosphorylated according to processes known per se by reacting with dichlorophosphoric acid-ω-alkyl halide esters and then converted by reacting with amines $NR^4R^5R^6$ to form the compounds of formula IV

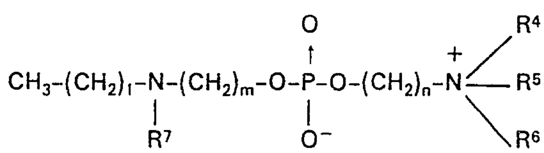 IV

which are hydrogenated according to methods known per se to form the compounds of formula X and are reacted with the carbonic acid derivatives of formula XI or XII.

8. A method of producing compounds according to any of claims 1 to 3 in which $R^1 = R^2 = H$ and $X = O$ in formula I, in which compounds of formula I in which $R^1$ = benzyl, $R^2 = H$ and $X = O$, are hydrogenated in an inert organic solvent in the presence of a conventional hydrogenation catalyst.

9. A method of producing compounds of formula X according to claim 6, in which compounds of formula IV

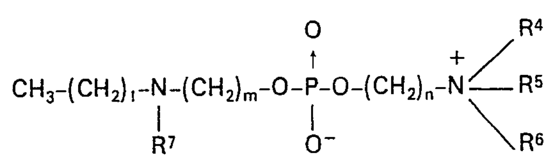 IV

wherein $R^4$, $R^5$, $R^6$, l, m, n represent the same as in

formula I and $R^7$ represents a radical separable by hydrogenation, such as, for example, benzyl or benzyloxy carbonyl, are hydrogenated in an inert organic solvent with the use of a conventional hydrogenation catalyst.

10. A method for producing compounds of formula IV according to claim 7, in which N,N-disubstituted aminoalkanols of formula III

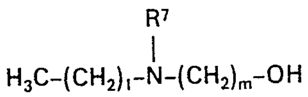 III

in which l, m and $R^7$ represent the same as in formula IV, are phosphorylated with a dichlorophosphoric acid-ω-alkyl halide ester of formula V

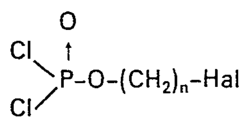 V

wherein n represents the same as in formula I and Hal represents a chlorine or a bromine atom, in an inert organic solvent, optionally with the use of an auxiliary base, and then reacting the products with an amine of formula VI

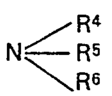 VI

wherein $R^4$, $R^5$, $R^6$ are the same as in formula I, in an inert organic solvent, optionally under pressure.

11. A method of producing compounds of formula IV according to claim 7, in which compounds of formula III according to claim 10 are phosphorylated with phosphorus oxytrichloride and then allow the product to react with an alkane diol of formula VII

$HO-(CH_2)_n-OH$ VII

in which n is the same as in formula I, possibly with the introduction of auxiliary bases and inert solvents to form the cyclic phosphor compounds of formula VIII

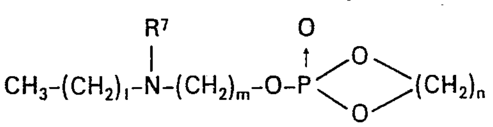 VIII

in which l, m, n represent the same as in formula I and $R^7$ represents the same as in formula IV, and to then allow the compounds of formula VIII to react with an amine of formula VI according to claim 10 in an organic solvent, optionally under pressure.

12. A method of producing compounds fo formula VIII according to claim 11, in which compounds of formula III according to claim 10 are reacted with a cyclic phosphor compound of formula IX

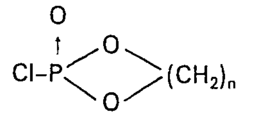 IX

wherein n represents the same as in formula I, in an inert organic solvent with the addition of an auxiliary base.

13. A method of producing compounds of formula III according to claim 10, in which N-alkylamino alkanols of formula II

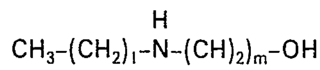 II

wherein l and m are the same as in formula I are reacted with a benzyl halide or a chloroformic acid benzyl ester in an inert organic medium, optionally with the addition of an auxiliary base.

14. A method of producing compounds according to any of claims 1, 4 and 5, in which disubstituted amino alcohols of formula XIII

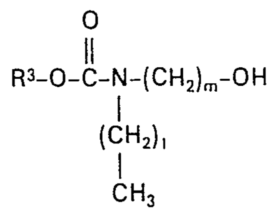 XIII

wherein $R^3$, l and m are the same as in formula I, are phosphorylated with a dichlorophosphoric acid-ω-alkyl halide ester of formula V according to claim 10 in an inert organic solvent, optionally with the use of an auxiliary base, and the product is then reacted with an amine of formula VI according to claim 10 in an inert organic solvent, optionally under pressure.

15. A method of producing compounds according to any of claims 1, 4 and 5, in which compounds of formula XIII according to claim 14 are converted by phosphorylation with phosphorus oxytrichloride and subsequent reaction with an alkane diol of formula VII according to claim 11 optionally with the introduction of auxiliary bases and inert solvents, to the cyclic phosphor compounds of formula XIV

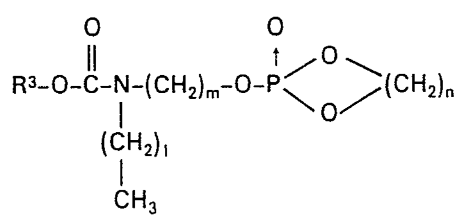 XIV

wherein $R^3$, l, m and n are the same as in formula I, and the compound XIV is subsequently allowed to react with an amine of formula VI according to claim 10 in an organic solvent, optionally under pressure.

16. A method of producing compounds according to any of claims 1, 4 and 5, in which compounds of formula XIII according to claim 14 are reacted with cyclic phosphor compounds of formula IX according to claim 12 in an inert organic solvent with the addition of an auxiliary base.

17. A method of producing compounds of formula XIII according to claim 14, in which N-alkylamino alkanols of formula II according to claim 7 are reacted with chloroformic acid esters in an inert organic medium, optionally with the addition of an auxiliary base.

18. Amethod of producing compounds according to any of claims 1, 4 and 5, wherein amino alkanol phospholipids of formula X according to claim 6 are reacted with chloroformic acid esters in an inert organic medium, optionally with the addition of an auxiliary base.

**Claims: (for Contracting State AT)**

1. A method of producing substituted aminoalkanol phospholipids of the general formula I

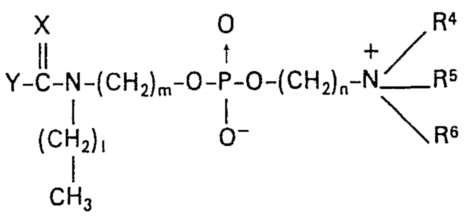

I

in which

X represents an oxygen or a sulphur atom and

Y the radical $-NR^1R^2$ or $-OR^3$,

wherein

$R^1$, $R^2$ can be the same or different and represent a saturated or unsaturated straight-chained or branched alkyl radical having 1 to 20 carbon atoms, a benzyl radical, a phenyl radical or hydrogen,

$R^3$ represents phenyl, benzyl or $C_{1-4}$-alkyl,

$R^4$, $R^5$, $R^6$ can be the same or different and represent hydrogen or a low alkyl radical having 1 to 4 carbon atoms,

l represents an integer from 0 to 19,

m represents an integer from 2 to 6,

n represents an integer from 2 to 4,

characterised in that, compounds of the general formula X

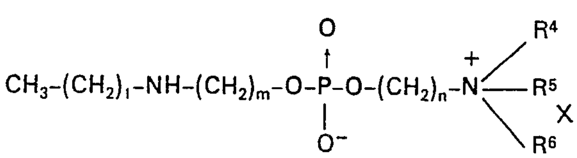

X

wherein $R^4$, $R^5$, $R^6$, l, m, n represent the same as in formula I, are reacted in a manner known per se with carbonic acid derivatives of formula XI or XII

$R^1-N=C=X$ XI

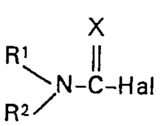

XII

wherein $R^1$, $R^2$, X represent the same as in Formula I, with or without the presence of an inert organic solvent, possibly with the addition of a catalyst or of an auxiliary base, in particular when compounds of formula XII are used, or characterised in that N-alkyl-aminoalkanols of the general formula II

$CH_3-(CH_2)_l-NH-(CH_2)_m-OH$ II

are reacted with benzyl halides or chloroformic acid benzyl esters to form compounds of formula III

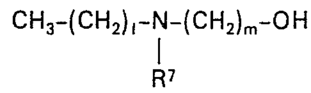

III

wherein $R^7$ represents a radical which may be separated by hydrogenation such as, for exemple, benzyl or benzyloxy carbonyl, and the compounds III are phosphorylated according to processes known per se by reacting with dichlorophosphoric acid-ω-alkyl halide esters and then converted by reacting with amines $NR^4R^5R^6$ to form the compounds of formula IV

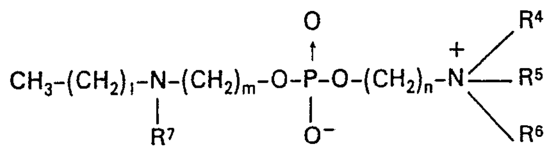

IV

which are hydrogenated according to methods known per se to form the compounds of formula X and are reacted with the carbonic acid derivatives of formula XI or XII, or for producing compounds according to formula I in which $R^1 = R^2 =$ H and X = O, wherein compounds of formula I in which $R^1$ = benzyl, $R^2$ = H and X = O, are hydrogenated in an inert organic solvent in the presence of a conventional hydrogenation catalyst.

2. A method of producing compounds of formula X according to claim 1, in which compounds of formula IV

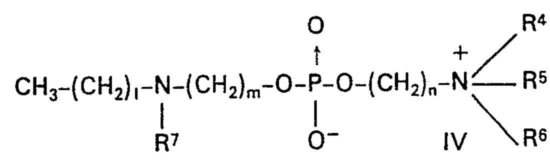

IV

wherein $R^4$, $R^5$, $R^6$, l, m, n represent the same as in formula I and $R^7$ represents a radical separable by hydrogenation, such as, for example, benzyl or benzyloxy carbonyl, are hydrogenated in an inert organic solvent with the use of a conventional hydrogenation catalyst.

3. A method for producing compounds of formula IV according to claim 1, in which N,N-disubstituted aminoalkanols of formula III

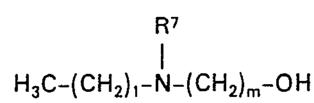

III

in which l, m and $R^7$ represent the same as in formula IV, are phosphorylated with a dichlorophosphoric acid-ω-alkyl halide ester of formula V

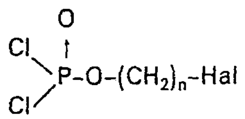

V

wherein n represents the same as in formula I and Hal represents a chlorine or a bromine atom, in an inert organic solvent, optionally with the use of an auxiliary base, and then reacting the products with an amine of formula VI

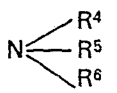

VI

wherein $R^4$, $R^5$, $R^6$ are the same as in formula I, in an inert organic solvent, optionally under pressure.

4. A method of producing compounds of formula IV according to claim 1, in which compounds of formula III according to claim 1 are phosphorylated with phosphorus oxytrichloride and then allow the product to react with an alkane diol of formula VII

$$HO-(CH_2)_n-OH \qquad VII$$

in which n is the same as in formula I, possibly with the introduction of auxiliary bases and inert solvents to form the cyclic phosphor compounds of formula VIII

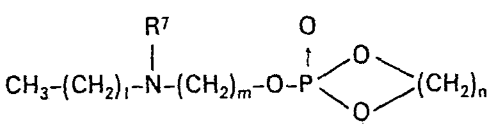

VIII

in which l, m, n represent the same as in formula I and $R^7$ represents the same as in formula IV, and to then allow the compounds of formula VIII to react with an amine of formula VI according to claim 1 in an organic solvent, optionally under pressure.

5. A method of producing compounds of formula VIII according to claim 4, in which compounds of formula III according to claim 1 are reacted with a cyclic phosphor compound of formula IX

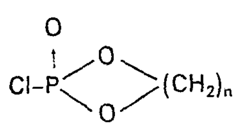

IX

wherein n represents the same as in formula I, in an inert organic solvent with the addition of an auxiliary base.

6. A method of producing compounds of formula III according to claim 1, in which N-alkylamino alkanols of formula II

$$CH_3-(CH_2)_l-\overset{H}{N}-(CH)_2)_m-OH \qquad II$$

wherein l and m are the same as in formula I are reacted with a benzyl halide or a chloroformic acid benzyl ester in an inert organic medium, optionally with the addition of an auxiliary base.

7. A method of producing compounds according to claim 1 with Y = $OR^3$ in formula I in which disubstituted amino alcohols of formula XIII

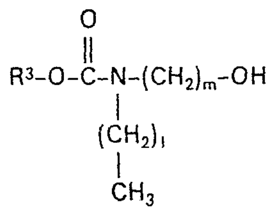

XIII

wherein $R^3$, l and m are the same as in formula I, are phosphorylated with a dichlorophosphoric acid-ω-alkyl halide ester of formula V according to claim 1 in an inert organic solvent, optionally with the use of an auxiliary base, and the product is then reacted with an amine of formula VI according to claim 1 in an inert organic solvent, optionally under pressure.

8. A method of producing compounds according to claim 1 with Y = $OR^3$ in formula I in which compounds of formula XIII according to claim 7 are converted by phosphorylation with phosphorus oxytrichloride and subsequent reaction with an alkane diol of formula VII according to claim 4 optionally with the introduction of auxiliary bases and inert solvents, to the cyclic phosphor compounds of formula XIV

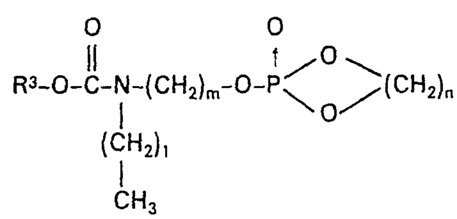

XIV

wherein $R^3$, l, m and n are the same as in formula I, and the compound XIV is subsequently allowed to react with an amine of formula VI according to claim 1 in an organic solvent, optionally under pressure.

9. A method of producing compounds according to claim 1 with Y = $OR^3$ in formula I in which compounds of formula XIII according to claim 7 are reacted with cyclic phosphor compounds of formula IX according to claim 5 in an inert organic solvent with the addition of an auxiliary base.

10. A method of producing compounds of formula XIII according to claim 7, in which N-alkylamino alkanols of formula II according to claim 1 are reacted with chloroformic acid esters in an inert organic medium, optionally with the addition of an auxiliary base.

11. A method of producing compounds according to claim 1 with Y = $OR^3$ in formula I wherein amino alkanol phospholipids of formula X according to claim 6 are reacted with chloroformic

acid esters in an inert organic medium, optionally with the addition of an auxiliary base.

**Revendications pour les Etats contractants: BE/CH-LI/DE/FR/GB/JT/LU/NL/SE**

1. Aminoalcanolphospholipides substitués de formule générale I

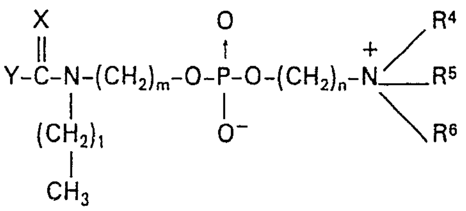
I

où
X représente un atome d'oxygène ou de soufre et
Y représente le radical $-NR^1R^2$ ou $-OR^3$,
où
$R^1$, $R^2$ peuvent être semblables ou différents et représentent un radical alcoyle en C1 – C20 saturé ou non saturé, à chaîne droite ou ramifiée, un radical benzyle, un radical phényle ou un hydrogène
$R^3$ représente un phényle, un benzyle ou un alcoyle en C1 à C4
$R^4$, $R^5$, $R^6$ peuvent être semblables ou différents et représentent un hydrogène ou un radical alcoyle inférieur en C1 à C4
l est un nombre entier allant de 0 à 19
m est un nombre entier allant de 2 à 16
n est un nombre entier allant de 2 à 4.

2. Aminoalcanolphospholipides substitués selon la revendication 1, caractérisés en ce que
X représente un atome d'oxygène ou de soufre et
Y représente le radical $-NR^1R^2$,
où
$R^1$, $R^2$ peuvent être semblables ou différents et représentent un radical alcoyle en C1 à C20 saturé ou non saturé, à chaîne droite ou ramifiée, un radical benzyle, un radical phényle ou un hydrogène
$R^4$, $R^5$, $R^6$ peuvent être semblables ou différents et représentent un hydrogène ou un radical alcoyle inférieur en C1 à C4
l est un nombre entier allant de 0 à 19
m est un nombre entier allant de 2 à 6
n est un nombre entier allant de 2 à 4.

3. Aminoalcanolphosphocholines substituées selon la revendication 1, caractérisées en ce que
X représente un atome d'oxygène ou de soufre et
Y représente le radical $-NR^1R^2$,
où
$R^1$, $R^2$ peuvent être semblables ou différents et représentent un radical alcoyle en C1 à C20
$R^4$, $R^5$, $R^6$ représentent chacun un groupe méthyle
l est un nombre entier allant de 0 à19
m est un nombre entier allant de 2 à 6 et
n vaut 2.

4. Aminoalcanolphospholipides substitués selon la revendication 1, caractérisés en ce que
X représente un atome d'oxygène et
Y représente le radical $-OR^3$,
où
$R^3$ représente un phényle, benzyle ou alcoyle en C1 à C4
$R^3$, $R^4$, $R^5$ peuvent être semblables ou différents et représentent un hydrogène ou un radical alcoyle inférieur en C1 à C4
l est un nombre entier allant de 0 à 19
m est un nombre entier allant de 2 à 6
n est un nombre entier allant de 2 à 4.

5. Aminoalcanolphosphocholines substituées selon la revendication 1, caractérisées en ce que
X représente un atome d'oxygène et
Y représente le radical $-OR^3$,
où
$R^3$ représente un benzyle ou un alcoyle en C1 à C4
$R^4$, $R^5$, $R^6$ représentent chacun un groupe méthyle
l est un nombre entier allant de 0 à 19
m est un nombre entier allant de 2 à 6 et
n vaut 2.

6. Procédé de préparation de composés selon les revendications 1-3, caractérisé en ce qu'on fait réagir de façon connue des composés de formule générale X

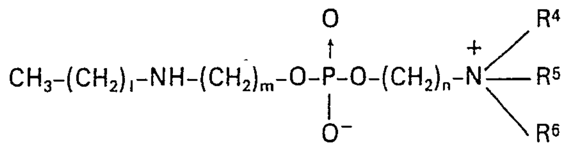
X

où $R^4$, $R^5$, $R^6$, l, m, n ont les significations données dans la formule I, avec des dérivés d'acide carbonique de formula XI ou XII

$R^1-N=C=X$ XI

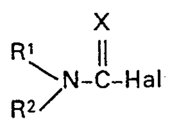
XII

où $R^1$, $R^2$, X ont les significations données dans la formule I en tant que tels ou dans un solvant organique quelconque, indifférent, éventuellement avec addition d'un catalyseur ou d'une base auxiliaire, en particulier lorsqu'on utilise les composés de formule XII.

7. Procédé de préparation de composés selon les revendications 1-3, caractérisé en ce qu'on fait réagir des N-alcoylaminoalcanols de formule générale II

$CH_3-(CH_2)_l-NH-(CH_2)_m-OH$ II

avec des halogénures de benzyle ou le chloroformiate de benzyle pour donner des composés de formule III,

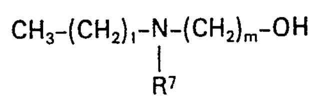
III

où $R^7$ représente un radical séparable par hydrogénation, comme p. ex. benzyle ou benzyloxycarbonyle, et l'on phoshphoryle les composés III selon des procédés connus par réaction avec des ω-halogénalcoylesters de l'acide dichlorophosphorique puis on les transforme par réaction avec des amines $NR^4R^5R^6$ pour donner les composés de formule IV,

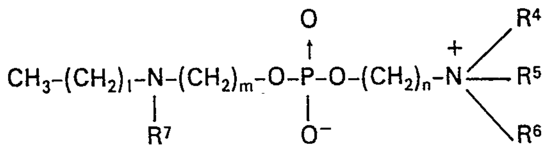 IV

que l'on hydrogène selon des procédés connus pour donner les composés de formule X et qu'on fait réagir avec les dérivés d'acide carbonique de formule XI ou XII.

8. Procédé de préparation de composés selon les revendications 1–3 avec $R^1 = R^2 = H$ et $X = O$ dans la formule I, caractérisé en ce qu'on hydrogène des composés de formule I où $R^1$ = benzyle, $R^2 = H$ et $X = O$ dans un solvant organique indifférent en présence d'un catalyseur d'hydrogénation habituel.

9. Procédé de préparation de composés de formule X selon la revendication 6, caractérisé en ce qu'on hydrogène les composés de formule IV

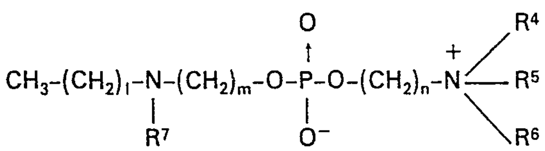 IV

où $R^4$, $R^5$, $R^6$, l, m, n ont les significations données dans la formule I et $R^7$ représente un radical séparable par hydrogénation, comme p. ex. benzyle ou benzyloxycarbonyle, dans un solvant organique indifférent en utilisant l'un des catalyseurs d'hydrogénation habituels.

10. Procédé de préparation des composés de formule IV selon la revendication 7, caractérisé en ce qu'on phosphoryle des aminoalcools N,N-disubstitués de formule III

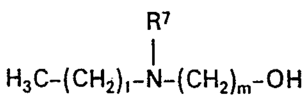 III

où l, m et $R^7$ ont la signification donnée dans la formule IV, avec un ω-halogénalcolyester d'acide dichlorophosphorique de formule V

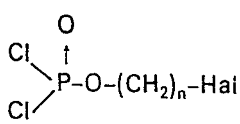 V

où n a la signification donnée dans la formule I et Hal représente un atome de chlore ou de brome, dans un solvant organique indifférent, éventuellement en utilisant une base auxiliaire, puis en ce qu'on fait réagir avec une amine de formule VI

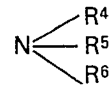 VI

où $R^4$, $R^5$, $R^6$ ont les signification données dans la formule I, dans un solvant organique indifférent, sous pression.

11. Procédé de préparation de composés de formule IV selon la revendication 7, caractérisé en ce qu'on phosphoryle des composés de formule III selon la revendication 10 avec de l'oxytrichlorure de phosphore puis en ce qu'on fait réagir avec un alcanediol de formule VII

$$HO{-}(CH_2)_n{-}OH \qquad VII$$

où n a la signification donnée dans la formule I, éventuellement en utilisant des bases auxiliaires et des solvants inertes pour donner les composés de phosphore cycliques de formule VIII

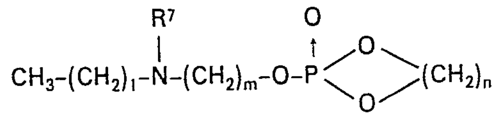 VIII

où l, m, n ont les significations données dans la formule I et $R^7$ a la signification donnée dans la formule IV et en ce qu'on fait réagir les composés VIII avec une amine de formule VI selon la revendication 10 dans un solvant organique, éventuellement sous pression.

12. Procédé de préparation de composés de formule VIII selon la revendication 11, caractérisé en ce qu'on fait réagir des composés de formule III selon la revendication 10 avec un composé de phosphore cyclique de formule IX

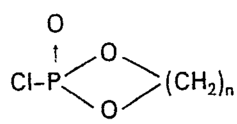 IX

où n a la signification donnée dans la formule I, dans un solvant organique indifférent avec addition d'une base auxiliaire.

13. Procédé de préparation des composés de formule III selon la revendication 10, caractérisé en ce qu'on fait réagir des N-alcoyl-aminoalcanols de formule II

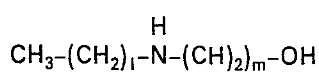 II

où l et m ont les significations données dans la formule I, avec un halogénure de benzyle ou le chloroformiate de benzyle dans un milieu organique inerte, éventuellement avec addition d'une base auxiliaire.

14. Procédé de préparation de composés selon les revendications 1, 4–5, caractérisé en ce qu'on phosphoryle des aminoalcools disubstitués de formule XIII

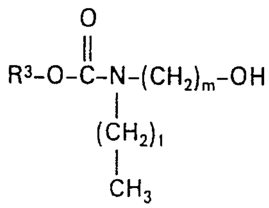

XIII

où $R^3$, l et m ont les significations données dans la formule I, avec un ω-halogénalcoylester d'acide dichlorophosphorique de formule V selon la revendication 10 dans un solvant organique indifférent, éventuellement en utilisant une base auxiliaire, puis en ce qu'on fait réagir avec une amine de formule VI selon la revendication 10 dans un solvant organique indifférent, éventuellement sous pression.

15. Procédé de préparation de composés selon les revendications 1, 4–5, caractérisé en ce qu'on fait réagir des composés de formule XIII selon la revendication 14 par phosphorylation avec de l'oxytrichlorure de phosphore puis par réaction avec un alcanediol de formule VII selon la revendication 11 éventuellement en utilisant des bases auxiliaires et des solvants inertes pour donner les composés de phosphore cycliques de formule XIV

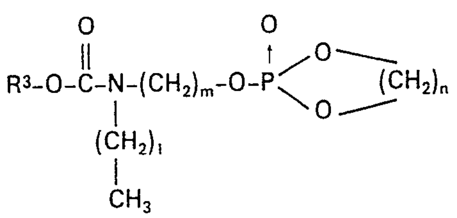

XIV

où $R^3$, l, m et n ont les significations données pour la formule I, puis en ce qu'on fait réagir le composé XIV avec une amine de formule VI selon la revendication 10 dans un solvant organique, éventuellement sous pression.

16. Procédé de préparation de composés selon les revendications 1, 4–5, caractérisé en ce qu'on fait réagir des composés de formule XIII selon la revendication 14 avec des composés de phosphore cycliques de formule IX selon la revendication 12 dans un solvant organique indifférent en ajoutant une base auxiliaire.

17. Procédé de préparation de composés de formule XIII selon la revendication 14, caractérisé en ce qu'on fait réagir des N-alcoyl-aminoalcanols de formule II selon la revendication 7 avec des esters de l'acide chloroformique dans un milieu organique inerte, éventuellement avec addition d'une base auxiliaire.

18. Procédé de préparation de composés selon les revendications 1, 4–5, caractérisé en ce qu'on fait réagir des aminoalcanolphospholipides de formule X selon la revendication 6 avec des esters de l'acide chloroformique dans un milieu organique inerte, éventuellement avec addition d'une base auxiliaire.

**Revendications pour l'Etat contr.: AT**

1. Procédé de préparation d'aminoalcanolphospholipides substitués de formule générale I

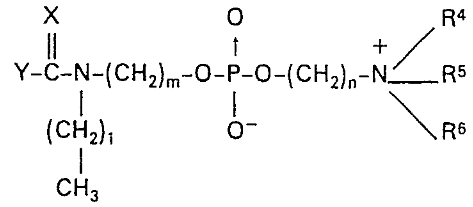

I

où

X représente un atome d'oxygène ou de soufre et

Y représente le radical $-NR^1R^2$ ou $-OR^3$,

où

$R^1$, $R^2$ peuvent être semblables ou différents et représentent un radical alcoyle en C1 à C20 saturé ou non saturé, à chaîne droite ou ramifiée, un radical benzyle, un radical phényle ou un hydrogène

$R^3$ représente un phényle, un benzyle ou un alcoyle en C1 à C4

$R^4$, $R^5$, $R^6$ peuvent être semblables ou différents et représentent un hydrogène ou un radical alcoyle inférieur en C1 à C4

l est un nombre entier allant de 0 à 19

m est un nombre entier allant de 2 à 16

n est un nombre entier allant de 2 à 4, caractérisé en ce qu'on fait réagir de façon connue des composés de formule générale

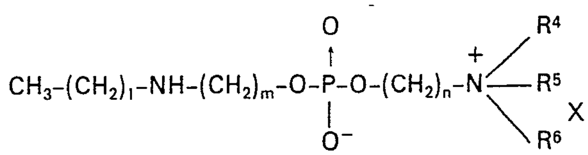

où $R^4$, $R^5$, $R^6$, l, m, n ont les significations données dans la formule I, avec des dérivés d'acide carbonique de formule XI ou XII

$R^1-N=C=X$ XI

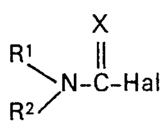

XII

où $R^1$, $R^2$, X ont les significations données dans la formule I en tant que tels ou dans un solvant organique quelconque, indifférent, éventuellement avec addition d'un catalyseur ou d'une base auxiliaire, en particulier lorsqu'on utilise les composés de formule XII,

ou

en ce qu'on fait réagir des N-alcoylaminoalcanols de formule générale

$CH_3-(CH_2)_l-NH-(CH_2)_m-OH$ II

avec des halogénures de benzyle ou le chloroformiate de benzyle pour donner des composés de formule III,

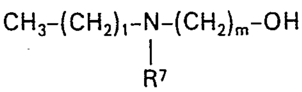

III

où $R^7$ représente un radical séparable par hydrogénation, comme p. ex. benzyle ou benzyloxycarbonyle, et l'on phosphoryle les composés III selon des procédés connus par réaction avec des ω-halogénalcoylesters de l'acide dichlorophosphorique puis on les transforme par réaction avec des amines $NR^4R^5R^6$ pour donner les composés de formule IV,

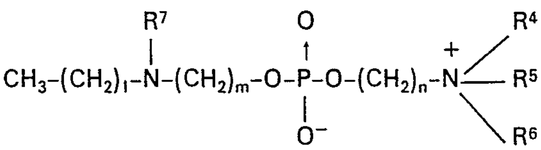

IV

que l'on hydrogène selon des procédés connus pour donner les composés de formule X et qu'on fait réagir avec les dérivés d'acide carbonique de formule XI ou XII, ou pour préparer des composés selon la formule 1 avec $R^1 = R^2 = H$ et $X = O$ dans la formule I, caractérisé en ce qu'on hydrogène des composés de formule I où $R^1$ = benzyle, $R^2 = H$ et $X = O$ dans un solvant organique indifférent en présence d'un catalyseur d'hydrogénation habituel.

2. Procédé de préparation de composés de formule X selon la revendication 1, caractérisé en ce qu'on hydrogène les composés de formule IV

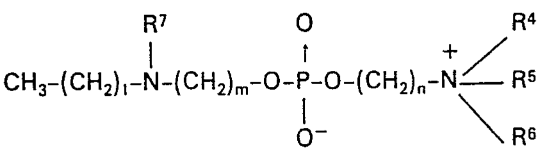

IV

où $R^4$, $R^5$, $R^6$, l, m, n ont les significations données dans la formule I et $R^7$ représente un radical séparable par hydrogénation, comme p. ex. benzyle ou benzyloxycarbonyle, dans un solvant organique indifférent en utilisant l'un des catalyseurs d'hydrogénation habituels.

3. Procédé de préparation des composés de formule IV selon la revendication 1, caractérisé en ce qu'on phosphoryle des aminoalcools N,N-disubstitués de formule III

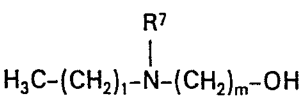

III

où l, m et $R^7$ ont la signification donnée dans la formule IV, avec un ω-halogénalcoylester d'acide dichlorophosphorique de formule V

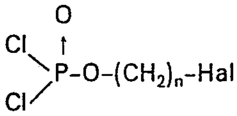

V

où n a la signification donnée dans la formule I et Hal représente un atome de chlore ou de brome, dans un solvant organique indifférent, éventuellement en utilisant une base auxiliaire, puis en ce qu'on fait réagir avec une amine de formule VI

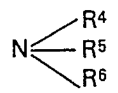

VI

où $R^4$, $R^5$, $R^6$ ont les significations données dans la formule I, dans un solvant organique indifférent, sous pression.

4. Procédé de préparation de composés de formule IV selon la revendication 1, caractérisé en ce qu'on phosphoryle des composés de formule III selon la revendication 1 avec de l'oxytrichlorure de phosphore puis en ce qu'on fait réagir avec un alcanediol de formule VII

$HO-(CH_2)_n-OH$ VII

où n a la signification donnée dans la formule I, éventuellement en utilisant des bases auxiliaires et des solvants inertes pour donner les composés de phosphore cycliques de formule VIII

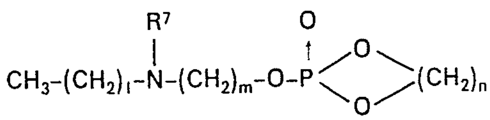

VIII

où l, m, n ont les significations données dans la formule I et $R^7$ a la signification donnée dans la formule IV et en ce qu'on fait réagir les composés VIII avec une amine de formule VI selon la revendication 1 dans un solvant organique, éventuellement sous pression.

5. Procédé de préparation de composés de formule VIII selon la revendication 4, caractérisé en ce qu'on fait réagir des composés de formule III selon la revendication 1 avec un composé de phosphore cyclique de formule IX

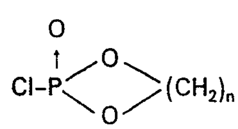

IX

où n a la signification donnée dans la formule I, dans un solvant organique indifférent avec addition d'une base auxiliaire.

6. Procédé de préparation des composés de formule III selon la revendication 1, caractérisé en ce qu'on fait réagir des N-alcoyl-aminoalcanols de formule II

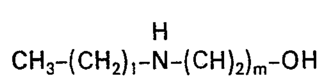

II

où l et m ont les significations données dans la formule I, avec un halogénure de benzyle ou le chloroformiate de benzyle dans un milieu organique inerte, éventuellement avec addition d'une base auxiliaire.

7. Procédé de préparation de composés selon la revendication 1, avec Y = $OR^3$ dans la formule I, caractérisé en ce qu'on phosphoryle des aminoalcools disubstitués de formule XIII

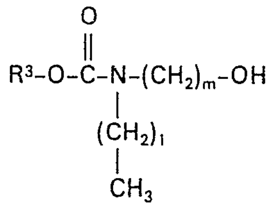

XIII

où $R^3$, l et m ont les significations données dans la formule I, avec un ω-halogénalcoylester d'acide dichlorophosphorique de formule V selon la revendication 10 dans un solvant organique indifférent, éventuellement en utilisant une base auxiliaire, puis en ce qu'on fait réagir avec une amine de formule VI selon la revendication 1 dans un solvant organique indifférent, éventuellement sous pression.

8. Procédé de préparation de composés selon la revendication 1 avec Y = $OR^3$ dans la formule I, caractérisé en ce qu'on fait réagir des composés de formule XIII selon la revendication 7 par phosphorylation avec de l'oxytrichlorure de phosphore puis par réaction avec un alcanediol de formule VII selon la revendication 4 éventuellement en utilisant des bases auxiliaires et des solvants inertes pour donner les composés de phosphore cycliques de formule XIV

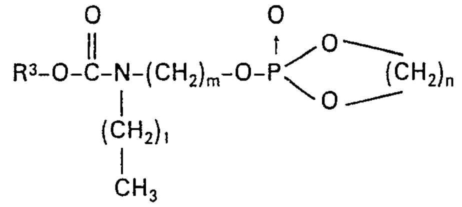

XIV

où $R^3$, l, m et n ont les significations données pour la formule I, puis en ce qu'on fait réagir le composé XIV avec une amine de formule VI selon la revendication 1 dans un solvant organique, éventuellement sous pression.

9. Procédé de préparation de composés selon la revendication 1 avec Y = $OR^3$ dans la formule I, caractérisé en ce qu'on fait réagir des composés de formule XIII selon la revendication 7 avec des composés de phosphore cyclique de formule IX selon la revendication 5 dans un solvant organique indifférent avec addition d'une base auxiliaire.

10. Procédé de préparation de composés de formule XIII selon la revendication 7, caractérisé en ce qu'on fait réagir des N-alcoyl-aminoalcanols de formule II selon la revendication 1 avec des esters de l'acide chloroformique dans un milieu organique inerte, éventuellement avec addition d'une base auxiliaire.

11. Procédé de préparation de composés selon la revendication 1 avec Y = $OR^3$ dans la formule I, caractérisé en ce qu'on fait réagir des aminoalcanol-phospholipidesdeformuleX selon la revendication 1 avec des esters de l'acide chloroformique dans un milieu organique inerte, éventuellement en ajoutant une base auxiliaire.